# EUROPEAN PATENT SPECIFICATION

(11) **EP 0 694 802 B1**
(45) Date of publication and mention of the grant of the patent: **12.12.2001**
(21) Application number: 95111758.9
(22) Date of filing: 26.07.1995
(51) Int. Cl.: G02B 26/10, G02B 26/12, G02B 27/00, G02B 13/00

(54) **Optical scanner**
Optischer Abtaster
Dispositif de balayage optique

(30) Priority: 28.07.1994 JP 17684794
(43) Date of publication of application: 31.01.1996
(73) Proprietor: MATSUSHITA ELECTRIC INDUSTRIAL CO., LTD., Kadoma-shi, Osaka 571-8501 (JP)
(72) Inventor: Yoshikawa, Motonobu, Osaka-shi, Osaka (JP); Nakashima, Hironori, Takarazuka-shi, Hyogo-ken (JP); Yamamoto, Yoshiharu, Toyonaka-shi, Osaka (JP); Yusa, Akinori, Kadoma-shi, Osaka (JP); Boku, Kazutake, Yao-shi, Osaka (JP); Morishima, Ken, Higashiosaka-shi, Osaka (JP)
(74) Representative: Kügele, Bernhard

(56) References cited:
- WO-A-82/02955
- US-A- 4 955 682
- US-A- 4 971 411
- US-A- 5 025 268
- US-A- 5 173 798
- US-A- 5 408 095
- PATENT ABSTRACTS OF JAPAN vol. 014, no. 158 (P-1027), 27 March 1990 & JP 02 015231 A (SANKYO SEIKI MFG CO LTD), 18 January 1990,

## Description

### BACKGROUND OF THE INVENTION

### 1. Field of the Invention:

The present invention relates to an optical scanner used for laser beam printers, laser facsimiles, digital copying machines, and the like.

### 2. Description of the Related Art:

Many types of optical scanner used for laser beam printers and the like include a semiconductor laser as a light source, a first image formation optical system for converging a light flux from the light source onto an optical deflector linearly for correcting a tilt of a deflection surface of the light deflector, a polygon mirror as the optical deflector, and a second image formation optical system for forming uniform spots on a surface to be scanned at a constant velocity.

The second image formation optical system is conventionally composed of a plurality of large-size glass lenses called a fθ lens. The fθ lens is disadvantageous in that it is expensive and the size reduction thereof is difficult. In order to overcome these problems and realize a small-size, inexpensive optical scanner; there have been proposed, for example, optical scanners which use a cylindrical mirror and a cylindrical lens (Japanese Laid-Open Patent Publication No. 1-300218), a spherical mirror and a cylindrical lens (Japanese Laid-Open Patent Publication No. 1-300217), and an aspherical mirror and a long cylinder optical element (e.g., a long toric lens) (USP 5,408,095 or USP 5,173,798) for the second image formation optical system.

However, in any of the above proposed optical systems, the correction of the curvature of field and the fθ correction are not sufficient and thus it is difficult to obtain an optical scanner with high resolution.

### SUMMARY OF THE INVENTION

The optical scanner of this invention includes a light source, an optical deflector for scanning a light flux from the light source, a first image formation optical system disposed between the light source and the optical deflector, and a second image formation optical system disposed between the optical deflector and a surface to be scanned, wherein the second image formation optical system includes a curved mirror for reflecting a light flux from the optical deflector and a correction lens for converging the light flux from the curved mirror on the surface to be scanned, a refractive power in a sub-scanning direction at a center of the correction lens in a scanning direction being different from a refractive power in a sub-scanning direction at a periphery of the correction lens, wherein, when a distance between a reflection point of the optical deflector and a reflection point of the curved mirror is L (mm), a distance between the reflection point of the curved mirror and an incident surface of the correction lens is M (mm), and the focal length of the second image formation optical system in the scanning direction is fₘ (mm), conditional formula (3) below is satisfied:${\text{0,43 (1-L/f}}_{\text{m}} {\text{) < M/f}}_{\text{m}} \text{< 0,75,}$ characterized in that the incident surface of the correction lens is a saddle toroidal surface where a circular arc which is present in the plane comprising the scanning direction and including the optical axis of the optical system is rotated around a rotational symmetric axis which is parallel to the scanning direction and present in the plane including the optical axis.

In one embodiment of the invention, an emergent surface of the correction lens is a cylindrical surface having a refractive power only in the scanning direction.

In another embodiment of the invention, an emergent surface of the correction lens is a aspherical cylindrical surface which has a refractive power only in the scanning direction and the section of the surface in the scanning direction has fourth or higher order development terms.

In still another embodiment of the invention, when a focal length of the second image formation optical system in the scanning direction is fₘ (mm), an effective scanning width of the surface to be scanned is W (mm), a distance between a deflection point of the optical deflector and a reflection point of the curved mirror is L (mm), and a distance between an effective outermost position of the curved mirror in the scanning direction and a tangent plane of a vertex of the mirror surface is zm (mm), conditional formula (1) below is satisfied:$\text{0.159(} \frac{\text{L}}{{\text{f}}_{\text{m}}} {\text{+C}}_{\text{1}} {\text{)}}^{\text{2}} {\text{+C}}_{\text{2}} \text{-0.267<} \frac{\text{Zm}}{{\text{f}}_{\text{m}}} \text{<0.159(} \frac{\text{L}}{{\text{f}}_{\text{m}}} {\text{+C}}_{\text{1}} {\text{)}}^{\text{2}} {\text{+C}}_{\text{2}} \text{-0.257}$ wherein${\text{C}}_{\text{1}} \text{=0.388(} \frac{\text{W}}{{\text{f}}_{\text{m}}} {\text{)}}^{\text{2}} \text{-0.416} \frac{\text{W}}{{\text{f}}_{\text{m}}} \text{-0.217}$${\text{C}}_{\text{2}} \text{=0.153(} \frac{\text{W}}{{\text{f}}_{\text{m}}} {\text{)}}^{\text{2}} \text{-0.404} \frac{\text{W}}{{\text{f}}_{\text{m}}}$

In still another embodiment of'the invention, the curved mirror has an axial-symmetric aspherical surface.

In still another embodiment of the invention, when a displacement of a vertex of the curved mirror from an optical axis is xₘ (mm), conditional formula (2) below is satisfied:${\text{0.5 < x}}_{\text{m}} \text{<5.0}$

In still another embodiment of the invention, an angle formed by a plane vertical to a reflection surface of the optical deflector and parallel to the scanning direction and an optical axis of the first image formation optical system is β_{P} (deg.), a distance between a reflection point of the optical deflector and a reflection point of the curved mirror is L (mm), a distance between the reflection point of the curved mirror and the incident surface of the correction lens is M (mm), a focal length of the second image formation optical system in the scanning direction is fₘ (mm), and a displacement of a center of the incident surface of the correction lens from the optical axis in the sub-scanning direction is x_{L} (mm), conditional formula (4) below is satisfied:$\text{0.11(} \frac{\text{L}}{{\text{f}}_{\text{m}}} \text{-0.043} \frac{\text{M}}{{\text{f}}_{\text{m}}} \text{+0.0007<} \frac{{\text{5•X}}_{\text{L}}}{{\text{f}}_{\text{m}} {\text{•β}}_{\text{ρ}}} \text{<0.11} \frac{\text{L}}{{\text{f}}_{\text{m}}} \text{-0.043} \frac{\text{M}}{{\text{f}}_{\text{m}}} \text{+0.0155}$

In still another embodiment of the invention, an angle formed by a plane vertical to a reflection surface of the optical deflector and parallel to the scanning direction and an optical axis of the first image formation optical system is β_{P} (deg.), a distance between a reflection point of the optical deflector and a reflection point of the curved mirror is L (mm), a distance between the reflection point of the curved mirror and an incident surface of the correction lens is M (mm), a focal length of the second image formation optical system in the scanning direction is fₘ (mm), and an angle formed by a normal to a vertex of the curved mirror and the optical axis is βₘ (deg.), conditional formula (5) below is satisfied:$\frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} {\text{+1.5<β}}_{\text{m}} \text{·} \frac{\text{5}}{{\text{β}}_{\text{ρ}}} \text{<} \frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} \text{+4.5}$

In still another embodiment of the invention, a focal length of the second image formation optical system in the scanning direction is fₘ (mm), and an effective scanning width of the surface to be scanned is W (mm), conditional formula (6) below is satisfied:$\text{1.30 <} \frac{\text{W}}{{\text{f}}_{\text{m}}} \text{< 2.13}$

In another aspect of the invention, the optical scanner comprises a light source, an optical deflector for scanning a light flux from the light source, a first image formation optical system disposed between the light source and the optical deflector, and a second image formation optical system disposed between the optical deflector and a surface to be scanned, wherein the second image formation optical system includes a curved mirror for reflecting a light flux from the optical deflector and a correction lens for correcting the light flux from the curved mirror on the surface to be scanned, a refractive power in a sub-scanning direction at a center of the correction lens in a scanning direction being different from a refractive power in a subscanning direction at a periphery of the correction lens,
characterized in that the incident surface of the correction lens is a saddle toroidal surface having a profile defined by a curve having fourth or higher order development terms which is present in the plane comprising the scanning direction and the optical axis of the optical system, and is rotated around a rotational symmetric axis which is parallel to the scanning direction and is present in the plane including the optical axis.

In one embodiment of the invention, an emergent surface of the correction lens is a cylindrical surface having a refractive power only in the scanning direction.

In another embodiment of the invention, an emergent surface of the correction lens is a aspherical cylindrical surface which has a refractive power only in the scanning direction and the section of the surface in the scanning direction has fourth or higher order development terms.

In still another embodiment of the invention, when a focal length of the second image formation optical system in the scanning direction is fₘ (mm), an effective scanning width of the surface to be scanned is W (mm), a distance between a deflection point of the optical deflector and a reflection point of the curved mirror is L (mm), and a distance between an effective outermost position of the curved mirror in the scanning direction and a tangent plane of a vertex of the mirror surface is zm (mm), conditional formula (1) below is satisfied:$\text{0.159(} \frac{\text{L}}{{\text{f}}_{\text{m}}} {\text{+C}}_{\text{1}} {\text{)}}^{\text{2}} {\text{+C}}_{\text{2}} \text{-0.267<} \frac{\text{Zm}}{{\text{f}}_{\text{m}}} \text{<0.159(} \frac{\text{L}}{{\text{f}}_{\text{m}}} {\text{+C}}_{\text{1}} {\text{)}}^{\text{2}} {\text{+C}}_{\text{2}} \text{-0.257}$ wherein${\text{C}}_{\text{1}} \text{=0.388(} \frac{\text{W}}{{\text{f}}_{\text{m}}} {\text{)}}^{\text{2}} \text{-0.416} \frac{\text{W}}{{\text{f}}_{\text{m}}} \text{-0.217}$${\text{C}}_{\text{2}} \text{=0.153(} \frac{\text{W}}{{\text{f}}_{\text{m}}} {\text{)}}^{\text{2}} \text{-0.404} \frac{\text{W}}{{\text{f}}_{\text{m}}}$

In still another embodiment of the invention, when a displacement of a vertex of the curved mirror from an optical axis is xₘ (mm), conditional formula (2) below is satisfied:${\text{0.5 < X}}_{\text{m}} \text{<5.0}$

In still another embodiment of the invention, when a distance between a reflection point of the optical deflector and a reflection point of the curved mirror is L (mm), a distance between the reflection point of the curved mirror and an incident surface of the correction lens is M (mm), and the focal length of the second image formation optical system in the scanning direction is fₘ (mm), conditional formula (3) below is satisfied:$\text{0.43(1-} \frac{\text{L}}{{\text{f}}_{\text{m}}} \text{)<} \frac{\text{M}}{{\text{f}}_{\text{m}}} \text{<0.75}$

In still another embodiment of the invention, an angle formed by a plane vertical to a reflection surface of the optical deflector and parallel to the scanning direction and an optical axis of the first image formation optical system is β_{P} (deg.), a distance between a reflection point of the optical deflector and a reflection point of the curved mirror is L (mm), a distance between the reflection point of the curved mirror and the incident surface of the correction lens is M (mm), a focal length of the second image formation optical system in the scanning direction is fₘ (mm), and a displacement of a center of the incident surface of the correction lens from the optical axis in the sub-scanning direction is x_{L} (mm), conditional formula (4) below is satisfied:$\text{0.11} \frac{\text{L}}{{\text{f}}_{\text{m}}} \text{-0.043} \frac{\text{M}}{{\text{f}}_{\text{m}}} \text{+0.0007<} \frac{{\text{5•X}}_{\text{L}}}{{\text{f}}_{\text{m}} {\text{•β}}_{\text{ρ}}} \text{<0.11} \frac{\text{L}}{{\text{f}}_{\text{m}}} \text{-0.043} \frac{\text{M}}{{\text{f}}_{\text{m}}} \text{+0.0155}$

In still another embodiment of the invention, an angle formed by a plane vertical to a reflection surface of the optical deflector and parallel to the scanning direction and an optical axis of the first image formation optical system is β_{P} (deg.), a distance between a reflection point of the optical deflector and a reflection point of the curved mirror is L (mm), a distance between the reflection point of the curved mirror and an incident surface of the correction lens is M (mm), a focal length of the second image formation optical system in the scanning direction is fₘ (mm), and an angle formed by a normal to a vertex of the curved mirror and the optical axis is βₘ (deg.), conditional formula (5) below is satisfied:$\frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} {\text{+1.5<β}}_{\text{m}} \text{·} \frac{\text{5}}{{\text{β}}_{\text{ρ}}} \text{<} \frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} \text{+4.5}$

In still another embodiment of the invention, a focal length of the second image formation optical system in the scanning direction is fₘ (mm), and an effective scanning width of the surface to be scanned is W (mm), conditional formula (6) below is satisfied:$\text{1.30 <} \frac{\text{W}}{{\text{f}}_{\text{m}}} \text{< 2.13}$

Alternatively, an image formation apparatus using the optical scanner is provided.

Thus, the invention described herein makes possible the advantages of (1) providing an optical scanner where high resolution can be realized with a reduction in size and cost and (2) providing a small-size and inexpensive image formation apparatus with high resolution by use of the above optical scanner.

These and other advantages of the present invention will become apparent to those skilled in the art upon reading and understanding the following detailed description with reference to the accompanying figures.

### BRIEF DESCRIPTION OF THE DRAWINGS

Figure **1** shows a configuration of an optical scanner according to the present invention in a scanning plane.
Figure **2** is a sectional view of the optical scanner according to the present invention taken along a sub-scanning direction.
Figure **3** shows a configuration of an image formation apparatus according to the present invention.
Figure **4** shows the curvature of field of a scanning optics according to the present invention.
Figure **5** shows the fθ characteristics of a scanning optics according to the present invention.

### DESCRIPTION OF THE PREFERRED EMBODIMENTS

The present invention will be described by way of examples with reference to the accompanying drawings.

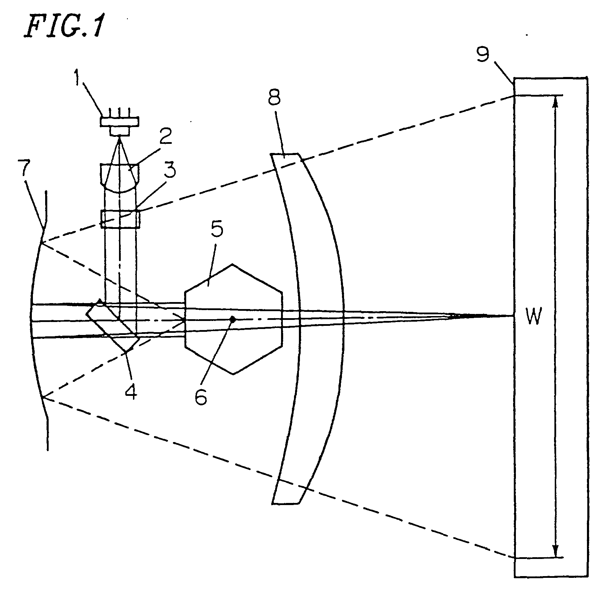

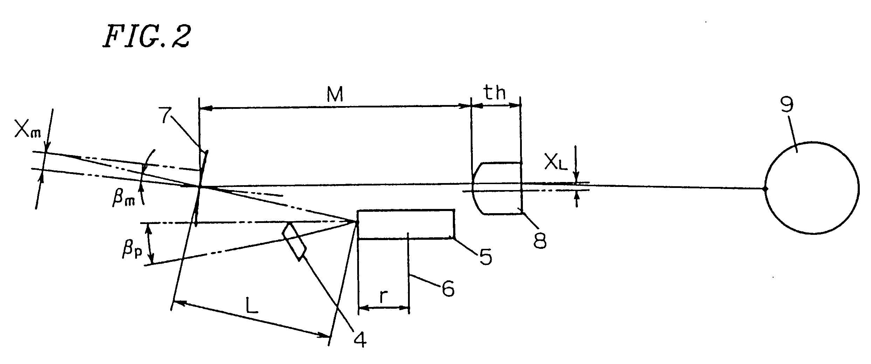

Figure **1** shows a configuration of an optical scanner according to the present invention in a scanning plane. Figure **2** is a sectional view of the optical scanner taken along a plane parallel to a sub-scanning direction including a scanning center axis. Referring to Figure **1**, the optical scanner of the present invention includes a semiconductor laser **1**, a collimator lens **2**, a cylindrical lens **3** having a refractive power only in the sub-scanning direction, a reflex mirror **4**, a polygon mirror **5** having a rotation center axis **6**, an axial-symmetric aspherical mirror **7**, and a correction lens **8** with a saddle toroidal incident surface and an aspherical cylindrical emergent surface. The reference numeral **9** denotes a photosensitive drum, and **W** (mm) denotes an effective scanning width.

The operation of the scanning optics with the above configuration will be described with reference to Figures **1** and **2**.

A light flux from the semiconductor laser **1** is made parallel by the collimator lens **2**, and then converged in the sub-scanning direction by the cylindrical lens **3**. The light is then reflexed by the reflex mirror **4** to be converged on a reflection surface of the polygon mirror **5** as a linear image. The light is scanned as the polygon mirror **5** rotates around the rotation center axis **6**, and is converged on the photosensitive drum **9** via the aspherical mirror **7** and the correction lens **8** to form an image on the photosensitive drum **9**. During the above process, the curvature of field in the scanning direction and the fθ characteristics are effectively corrected mainly by the aspherical mirror **7** and the emergent surface of the correction lens **8**, while the curvature of field in the sub-scanning direction is effectively corrected by the incident surface of the correction lens **8**.

The shape of the axial-symmetric aspherical mirror **7** is expressed by formula (7) below when z (mm) is the sag at a coordinate p (mm) with regard to the symmetric axis from the tangent plane of the vortex of the surface, i.e., the distance between the coordinate p and the tangent plane of the vertex of the plane, where the direction toward the photosensitive drum **9** is positive:$\text{z=} \frac{\frac{{\text{p}}^{\text{2}}}{\text{Rm}}}{\text{1+} \sqrt{\text{1-(1+Km)(} \frac{\text{p}}{\text{Rm}} {\text{)}}^{\text{2}}}} {\text{+ Dm • p}}^{\text{4}} {\text{+ Em • p}}^{\text{6}} {\text{+ Fm • p}}^{\text{8}} {\text{+ Gm • p}}^{\text{10}}$ wherein Rₘ (mm) is the radius of curvature, Kₘ is the conical constant, Dₘ, Eₘ, Fₘ, and Gₘ are the higher-order constants.

An example of an incident surface of a correction lens **8** not forming part of the invention as claimed is a saddle toroidal surface which is expressed by formula (8) below when z (mm) is the sag at a position of x (mm) in the sub-scanning direction and y (mm) in the scanning direction in a coordinate having the vertex of the surface as the origin from the tangent plane of the vertex where the direction toward the photosensitive drum **9** is positive: 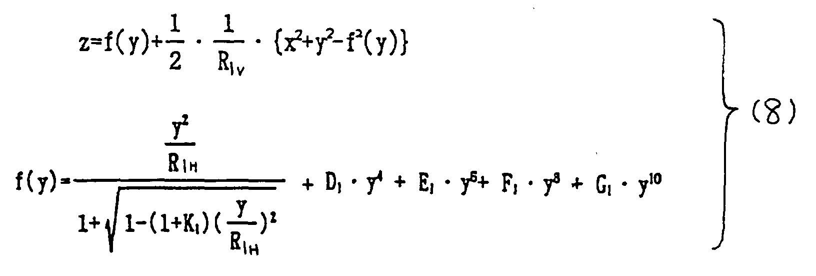 wherein R_{1H} (mm) is the radius of curvature in the scanning direction, R_{1V} (mm) is the radius of curvature in the sub-scanning direction, K₁ is the conical constant relating to the scanning direction, and D₁, E₁, F₁, and G₁ are the higher-order constants relating to the scanning direction.

The emergent surface of the correction lens 8 is an aspherical cylindrical surface or a barrel toroidal surface which is expressed by formula (9) below when z (mm) is the sag at a position of x (mm) in the sub-scanning direction and y (mm) in the scanning direction in a coordinate having the vertex of the surface as the origin where the direction toward the photosensitive drum 9 is positive: 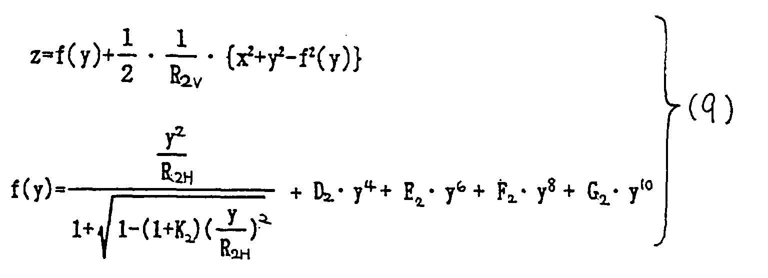 wherein R_{2H} (mm) is the radius of curvature in the scanning direction, R_{2V} (mm) is the radius of curvature in the sub-scanning direction, K₂ is the conical constant relating to the scanning direction, and D₂, E₂, F₂, and G₂ are the higher-order constants relating to the scanning direction.

The reference codes in Figure 2 denote the following:
**L** (mm): distance between the deflection point of the polygon mirror **5** and the reflection point of the aspherical mirror **7**;
**M** (mm): distance between the reflection point of the aspherical mirror **7** and the incident surface of the correction lens **8**;
**th** (mm): center thickness of the correction lens **8**;
**r** (mm): distance between the reflection surface of the polygon mirror **5** and the rotation center axis **6** thereof;
**x**_{**m**} (mm): displacement of the vertex of the aspherical mirror **7** from the optical axis in the sub-scanning direction, i.e., distance between the normal to the vertex of the aspherical mirror **7** and the reflection point of the polygon mirror **5**;
**x**_{**L**} (mm): displacement of the center of the incident surface of the correction lens **8** from the optical axis in the sub-scanning direction, i.e., distance between the incident point of the optical axis to the correction lens **8** and the normal to the vertex of the incident surface of the correction lens **8**;
**β**_{**p**} (deg.): angle formed by the plane vertical to the reflection surface of the polygon mirror **5** and parallel to the scanning direction and the optical axis of the reflex mirror **4**; and
**β**_{**m**} (deg.): angle formed by the normal to the vertex of the aspherical mirror **7** and the optical axis.

Next, examples of the parameters of an optical scanner are shown in the following tables as Examples 1 to 22. In the tables, fₘ (mm) denotes the focal length of a second image formation optical system in the scanning direction, and n denotes the refractive index of the lens material for the correction lens **5** at the wavelength of 780 nm. In the following tables, the expression "z e +y" is equivalent to z × 10^{+y}. For example, "1.2e+02" is equivalent to 1.2 X 10², that is 120.

### Example 1

| | | | | | | | |
|---|---|---|---|---|---|---|---|
| W | 220 | L | 36.0 | M | 62.5 | r | 17.32 |
| Xₘ | 1.0 | X_{L} | 2.00 | βₚ | 4.2 | βₘ | 3.75 |
| fₘ | 135.471 | | | | | | |
| Rₘ | 246.2630 | th | 10 | R_{1H} | -500.110 | R_{2H} | 1004.954 |
| Kₘ | -1.59656e+01 | n | 1.51922 | R_{1V} | 19.769 | R_{2V} | 133.475 |
| Dₘ | -1.63932e-07 | | | K₁ | 0.00000 | K₂ | 0.00000 |
| Eₘ | 8.48113e-11 | | | D₁ | 3.63763e-08 | D₂ | -3.85296e-07 |
| Fₘ | -2.46270e-14 | | | E₁ | -5.89551e-12 | E₂ | 3.56933e-11 |
| Gₘ | 2.88553e-18 | | | F₁ | -5.28400e-16 | F₂ | -3.29169e-15 |
| | | | | G₁ | 9.29471e-21 | G₂ | 1.39801e-19 |

### Example 2

| | | | | | | | |
|---|---|---|---|---|---|---|---|
| W | 220 | L | 36.0 | M | 62.5 | r | 17.32 |
| Xₘ | 1.0 | x_{L} | 2.60 | β ₚ | 4.8 | β ₘ | 3.75 |
| fₘ | 135.461 | | | | | | |
| Rₘ | 245.538 | th | 6 | R_{1H} | -420.802 | R_{2H} | 1520.693 |
| Kₘ | -2.03787e+01 | n | 1.51922 | R_{1V} | 22.492 | R_{2V} | ∞ |
| Dₘ | -1.50852e-07 | | | K₁ | 0.00000 | K₂ | 0.00000 |
| Eₘ | 9.86386e-11 | | | D₁ | 1.01764e-08 | D₂ | -4.37046e-07 |
| Fₘ | -3.99974e-14 | | | E₁ | 2.01354e-13 | E₂ | 4.26431e-11 |
| Gₘ | 7.61824e-18 | | | F₁ | 8.58569e-16 | F₂ | 2.92046e-15 |
| | | | | G₁ | -1.18174e-19 | G₂ | 3.09542e-20 |

### Example 3

| | | | | | | | |
|---|---|---|---|---|---|---|---|
| W | 220 | L | 36.0 | M | 45.0 | r | 17.32 |
| xₘ | 1.5 | x_{L} | 3.25 | β ₚ | 5.0 | β ₘ | 1.0 |
| fₘ | 135.666 | | | | | | |
| Rₘ | 231.271 | th | 10 | R_{1H} | -330.159 | R_{2H} | 919.966 |
| Kₘ | -3.32353e+01 | n | 1.51922 | R_{1V} | 24.272 | R_{2V} | ∞ |
| Dₘ | -9.14563e-08 | | | K₁ | 0.00000 | K₂ | 0.00000 |
| Eₘ | 7.22560e-11 | | | D₁ | 3.71320e-08 | D₂ | -6.46412e-07 |
| Fₘ | -2.76691e-14 | | | E₁ | -2.70826e-12 | E₂ | 9.45474e-11 |
| Gₘ | 4.29321e-18 | | | F₁ | -3.07221e-16 | F₂ | -1.22253e-14 |
| | | | | G₁ | 9.62415e-20 | G₂ | 6.94307e-19 |

### Example 4

| | | | | | | | |
|---|---|---|---|---|---|---|---|
| W | 220 | L | 36.0 | M | 55.0 | r | 17.32 |
| xₘ | 1.5 | x_{L} | 3.00 | β ₚ | 5.0 | β ₘ | 3.0 |
| fₘ | 135.506 | | | | | | |
| Rₘ | 239.737 | th | 10 | R_{1H} | -370.703 | R_{2H} | 1245.574 |
| Kₘ | -2.72444e+01 | n | 1.51922 | R_{1V} | 23.526 | R_{2V} | ∞ |
| Dₘ | -1.05916e-07 | | | K₁ | 0.00000 | K₂ | 0.00000 |
| Eₘ | 8.57296e-11 | | | D₁ | 4.43867e-08 | D₂ | -4.75137e-07 |
| Fₘ | -3.76883e-14 | | | E₁ | -5.56782e-12 | E₂ | 5.72248e-11 |
| Gₘ | 7.50089e-18 | | | F₁ | 5.29870e-16 | F₂ | -6.55023e-15 |
| | | | | G₁ | -1.45599e-20 | G₂ | 3.30934e-19 |

### Example 5

| | | | | | | | |
|---|---|---|---|---|---|---|---|
| W | 220 | L | 36.0 | M | 62.5 | r | 17.32 |
| xₘ | 1.5 | X_{L} | 2.60 | β ₚ | 5.0 | β ₘ | 3.75 |
| fₘ | 135.400 | | | | | | |
| Rₘ | 244.281 | th | 10 | R_{1H} | -413.180 | R_{2H} | 1209.886 |
| Kₘ | -1.94544e+01 | n | 1.51922 | R_{1V} | 22.557 | R_{2V} | ∞ |
| Dₘ | -1.46423e-07 | | | K₁ | 0.00000 | K₂ | 0.00000 |
| Eₘ | 9.83633e-11 | | | D₁ | 3.05549e-08 | D₂ | -4.04940e-07 |
| Fₘ | -4.08015e-14 | | | E₁ | -3.20937e-12 | E₂ | 3.95771e-11 |
| Gₘ | 7.92061e-18 | | | F₁ | 7.11185e-16 | F₂ | -3.31930e-15 |
| | | | | G₁ | -6.99536e-20 | G₂ | 1.02164e-19 |

### Example 6

| | | | | | | | |
|---|---|---|---|---|---|---|---|
| W | 220 | L | 36.0 | M | 75.0 | r | 17.32 |
| xₘ | 1.5 | x_{L} | 2.00 | β ₚ | 5.0 | β ₘ | 5.25 |
| fₘ | 135.055 | | | | | | |
| Rₘ | 248.615 | th | 10 | R_{1H} | -491.670 | R_{2H} | 813.007 |
| Kₘ | -1.46706e+01 | n | 1.51922 | R_{1V} | 20.277 | R_{2V} | ∞ |
| Dₘ | -1.52865e-07 | | | K₁ | 0.00000 | K₂ | 0.00000 |
| Eₘ | 1.02675e-10 | | | D₁ | 3.94670e-08 | D₂ | -3.36010e-07 |
| Fₘ | -4.55279e-14 | | | E₁ | -2.60797e-12 | E₂ | 3.08420e-11 |
| Gₘ | 9.22406e-18 | | | F₁ | -2.114404-16 | F₂ | -3.03034e-15 |
| | | | | G₁ | 3.06827e-20 | G₂ | 1.26506e-19 |

### Example 7

| | | | | | | | |
|---|---|---|---|---|---|---|---|
| W | 220 | L | 36.0 | H | 90.0 | r | 17.32 |
| xₘ | 1.5 | x_{L} | 1.50 | β ₚ | 5.0 | β ₘ | 6.25 |
| fₘ | 134.835 | | | | | | |
| Rₘ | 251.998 | th | 10 | R_{1H} | -709.362 | R_{2H} | 392.109 |
| Kₘ | -1.05614e+01 | n | 1.51922 | R_{1V} | 16.417 | R_{2V} | ∞ |
| Dₘ | -1.41582e-07 | | | K₁ | 0.00000 | K₂ | 0.00000 |
| Eₘ | 7.54551e-11 | | | D₁ | 1.63683e-08 | D₂ | -3.23877e-07 |
| Fₘ | -2.43957e-14 | | | E₁ | 6.38129e-12 | E₂ | 2.97499e-11 |
| Gₘ | 2.81184e-18 | | | F₁ | -1.67552e-15 | F₂ | -3.26806e-15 |
| | | | | G₁ | 1.00364e-19 | G₂ | 1.36524e-19 |

### Example 8

| | | | | | | | |
|---|---|---|---|---|---|---|---|
| W | 220 | L | 36.0 | M | 100.0 | r | 17.32 |
| xₘ | 1.5 | x_{L} | 0.00 | β ₚ | 5.0 | β ₘ | 6.0 |
| fₘ | 134.942 | | | | | | |
| Rₘ | 255.010 | th | 10 | R_{1H} | -1502.287 | R_{2H} | 238.937 |
| Kₘ | -7.80814e+00 | n | 1.51922 | R_{1V} | 13.026 | R_{2V} | ∞ |
| Dₘ | -1.36071e-07 | | | K₁ | 0.00000 | K₂ | 0.00000 |
| Eₘ | 6.46895e-11 | | | D₁ | -3.56089e-08 | D₂ | -3.53823e-07 |
| Fₘ | -1.85439e-14 | | | E₁ | 1.48866e-11 | E₂ | 3.29342e-11 |
| Gₘ | 1.07796e-18 | | | F₁ | -2.18320e-15 | F₂ | -3.80356e-15 |
| | | | | G₁ | 9.55852e-20 | G₂ | 1.43061e-19 |

### Example 9

| | | | | | | | |
|---|---|---|---|---|---|---|---|
| W | 220 | L | 50.0 | M | 60.0 | r | 17.32 |
| xₘ | 1.5 | x_{L} | 3.75 | β ₚ | 5.0 | β ₘ | 2.5 |
| fₘ | 135.735 | | | | | | |
| Rₘ | 251.692 | th | 10 | R_{1H} | -530.316 | R_{2H} | 3696.546 |
| Kₘ | 9.64148e-01 | n | 1.51922 | R_{1V} | 25.770 | R_{2V} | ∞ |
| Dₘ | -1.23714e-07 | | | K₁ | 0.00000 | K₂ | 0.00000 |
| Eₘ | 1.63463e-11 | | | D₁ | 2.28444e-08 | D₂ | -2.17034e-07 |
| Fₘ | -1.64810e-15 | | | E₁ | -2.43966e-12 | E₂ | 1.17745e-11 |
| Gₘ | 0.00000 | | | F₁ | 1.44160e-16 | F₂ | -4.75011e-16 |
| | | | | G₁ | 0.00000 | G₂ | 0.00000 |

### Example 10

| | | | | | | | |
|---|---|---|---|---|---|---|---|
| W | 220 | L | 50.0 | M | 100.0 | r | 17.32 |
| xₘ | 1.5 | x_{L} | 2.00 | β ₚ | 5.0 | β ₘ | 4.5 |
| fₘ | 135.478 | | | | | | |
| Rₘ | 260.082 | th | 10 | R_{1H} | -1588.665 | R_{2H} | 402.961 |
| Kₘ | 7.00774e+00 | n | 1.51922 | R_{1V} | 14.644 | R_{2V} | ∞ |
| Dₘ | -1.24741e-07 | | | K₁ | 0.00000 | K₂ | 0.00000 |
| Eₘ | 7.18887e-12 | | | D₁ | 5.64607e-09 | D₂ | -1.72211e-07 |
| Fₘ | -1.56599e-15 | | | E₁ | -1.59469e-12 | E₂ | 9.13411e-13 |
| Gₘ | 0.00000 | | | F₁ | 4.67380e-17 | F₂ | -4.68695e-18 |
| | | | | G₁ | 0.00000 | G₂ | 0.00000 |

### Example 11

| | | | | | | | |
|---|---|---|---|---|---|---|---|
| W | 220 | L | 60.0 | M | 35.0 | r | 17.32 |
| xₘ | 1.5 | x_{L} | 5.75 | β ₚ | 5.0 | β ₘ | 0.75 |
| fₘ | 135.833 | | | | | | |
| Rₘ | 244.537 | th | 10 | R_{1H} | -606.287 | R_{2H} | 1667.512 |
| Kₘ | 8.51804e-01 | n | 1.51922 | R_{1V} | 32.518 | R_{2V} | ∞ |
| Dₘ | -1.01091e-07 | | | K₁ | 0.00000 | K₂ | 0.00000 |
| Eₘ | 9.04368e-12 | | | D₁ | -3.68083e-08 | D₂ | -2.84790e-07 |
| Fₘ | -6.34970e-16 | | | E₁ | 9.34622e-12 | E₂ | 2.61246e-11 |
| Gₘ | 0.00000 | | | F₁ | 8.01597e-16 | F₂ | -1.50801e-15 |
| | | | | G₁ | 0.00000 | G₂ | 0.00000 |

### Example 12

| | | | | | | | |
|---|---|---|---|---|---|---|---|
| W | 220 | L | 70.0 | M | 35.0 | r | 17.32 |
| Xₘ | 1.5 | X_{L} | 7.00 | β ₚ | 5.0 | β ₘ | 1.5 |
| fₘ | 135.796 | | | | | | |
| Rₘ | 253.930 | th | 10 | B_{1H} | -747.578 | R_{2H} | 38572.78 |
| Kₘ | 4.04873e+00 | n | 1.51922 | R_{1V} | 35.811 | R_{2V} | ∞ |
| Dₘ | -7.74599e-08 | | | K₁ | 0.00000 | K₂ | 0.00000 |
| Eₘ | 1.94745e-12 | | | D₁ | -3.80465e-08 | D₂ | -1.62724e-07 |
| Fₘ | -3.03958e-16 | | | E₁ | 8.97492e-12 | E₂ | 1.55766e-11 |
| Gₘ | 0.00000 | | | F₁ | -6.72123e-16 | F₂ | -8.41019e-16 |
| | | | | G₁ | 0.00000 | G₂ | 0.00000 |

### Example 13

| | | | | | | | |
|---|---|---|---|---|---|---|---|
| W | 220 | L | 80.0 | M | 35.0 | r | 17.32 |
| xₘ | 1.5 | x_{L} | 8.00 | β ₚ | 5.0 | β ₘ | 2.25 |
| fₘ | 135.731 | | | | | | |
| Rₘ | 263.487 | th | 10 | R_{1H} | -894.161 | R_{2H} | -1754.17 |
| Kₘ | 3.30594e+00 | n | 1.51922 | R_{1V} | 38.920 | R_{2V} | ∞ |
| Dₘ | -4.33704e-08 | | | K₁ | 0.00000 | K₂ | 0.00000 |
| Eₘ | 4.46328e-13 | | | D₁ | -3.61652e-08 | D₂ | -8.41032e-08 |
| Fₘ | -1.06606e-16 | | | E₁ | -7.04205e-12 | E₂ | 9.86436e-12 |
| Gₘ | 0.00000 | | | F₁ | -4.72947e-16 | F₂ | -4.94179e-16 |
| | | | | G₁ | 0.00000 | G₂ | 0.00000 |

### Example 14

| | | | | | | | |
|---|---|---|---|---|---|---|---|
| W | 220 | L | 80.0 | M | 25.0 | r | 17.32 |
| xₘ | 1.5 | x_{L} | 9.00 | β ₚ | 5.0 | β ₘ | 2.25 |
| fₘ | 135.708 | | | | | | |
| Rₘ | 262.705 | th | 10 | R_{1H} | -856.991 | R_{2H} | -1608.667 |
| Kₘ | -3.15765e+00 | n | 1.51922 | R_{1V} | 41.394 | R_{2V} | ∞ |
| Dₘ | -4.60391e-08 | | | K₁ | 0.00000 | K₂ | 0.00000 |
| Eₘ | 7.88534e-13 | | | D₁ | -3.50227e-08 | D₂ | -9.48573e-08 |
| Fₘ | -1.06984e-16 | | | E₁ | 5.92193e-12 | E₂ | 9.82103e-12 |
| Gₘ | 0.00000 | | | F₁ | -4.14847e-16 | F₂ | -4.57249e-16 |
| | | | | G₁ | 0.00000 | G₂ | 0.00000 |

### Example 15

| | | | | | | | |
|---|---|---|---|---|---|---|---|
| W | 220 | L | 80.0 | M | 75.0 | r | 17.32 |
| xₘ | 1.5 | X_{L} | 6.00 | β ₚ | 5.0 | β ₘ | 3.0 |
| fₘ | 135.724 | | | | | | |
| Rₘ | 268.115 | th | 10 | R_{1H} | -1257.495 | R_{2H} | -2257.703 |
| Kₘ | 2.38284e+00 | n | 1.51922 | R_{1V} | 27.353 | R_{2V} | ∞ |
| Dₘ | -2.99461e-08 | | | K₁ | 0.00000 | K₂ | 0.00000 |
| Eₘ | 1.38238e-13 | | | D₁ | -3.35062e-10 | D₂ | -3.10692e-08 |
| Fₘ | -4.11335e-17 | | | E₁ | 1.66667e-13 | E₂ | 1.47339e-12 |
| Gₘ | 0.00000 | | | F₁ | -7.07430e-18 | F₂ | -1.80438e-17 |
| | | | | G₁ | 0.00000 | G₂ | 0.00000 |

### Example 16

| | | | | | | | |
|---|---|---|---|---|---|---|---|
| W | 220 | L | 80.0 | M | 75.0 | r | 17.32 |
| xₘ | 1.5 | x_{L} | 3.00 | β ₚ | 2.5 | β ₘ | 1.5 |
| fₘ | 135.530 | | | | | | |
| Rₘ | 269.986 | th | 10 | R_{1H} | -1358.679 | R_{2H} | -2535.109 |
| Kₘ | 2.14515e+00 | n | 1.51922 | R_{1V} | 26.200 | R_{2V} | ∞ |
| Dₘ | -2.79445e-08 | | | K₁ | 0.00000 | K₂ | 0.00000 |
| Eₘ | 1.59213e-13 | | | D₁ | -4.01994e-10 | D₂ | -2.93461e-08 |
| Fₘ | -3.33182e-17 | | | E₁ | 3.17189e-13 | E₂ | 1.55062e-12 |
| Gₘ | 0.00000 | | | F₁ | -1.55018e-17 | F₂ | -2.28660e-17 |
| | | | | G₁ | 0.00000 | G₂ | 0.00000 |

### Example 17

| | | | | | | | |
|---|---|---|---|---|---|---|---|
| W | 220 | L | 36.0 | M | 62.5 | r | 17.32 |
| xₘ | 1.5 | x_{L} | 2.60 | β ₚ | 5.0 | β ₘ | 3.75 |
| fₘ | 131.6983 | | | | | | |
| Rₘ | 242.079 | th | 10 | R_{1H} | -420.617 | R_{2H} | 3140.212 |
| Kₘ | -1.76081e+01 | n | 1.51922 | R_{1V} | 22.098 | R_{2V} | ∞ |
| Dₘ | -1.43480e-07 | | | K₁ | 0.00000 | K₂ | 0.00000 |
| Eₘ | 9.50088e-11 | | | D₁ | 3.25198e-08 | D₂ | -3.85403e-07 |
| Fₘ | -4.03494e-14 | | | E₁ | -4.67309e-12 | E₂ | 3.56563e-11 |
| Gₘ | 7.92061e-18 | | | F₁ | 8.83310e-16 | F₂ | -3.09489e-15 |
| | | | | G₁ | -6.99536e-20 | G₂ | 1.02164e-19 |

### Example 18

| | | | | | | | |
|---|---|---|---|---|---|---|---|
| W | 220 | L | 60.0 | M | 35.0 | r | 17.32 |
| xₘ | 1.5 | x_{L} | 5.75 | β ₚ | 5.0 | β ₘ | 0.75 |
| fₘ | 132.127 | | | | | | |
| Rₘ | 240.626 | th | 10 | R_{1H} | -573.848 | R_{2H} | 3365.851 |
| Kₘ | 1.17583e+00 | n | 1.51922 | R_{1V} | 32.014 | R_{2V} | ∞ |
| Dₘ | -9.82525e-08 | | | K₁ | 0.00000 | K₂ | 0.00000 |
| Eₘ | 8.01295e-12 | | | D₁ | 1.24037e-09 | D₂ | -2.31664e-07 |
| Fₘ | -5.65937e-16 | | | E₁ | -7.60029e-13 | E₂ | 1.55087e-11 |
| Gₘ | 0.00000 | | | F₁ | 9.79549e-17 | F₂ | -6.77801e-16 |
| | | | | G₁ | 0.00000 | G₂ | 0.00000 |

### Example 19

| | | | | | | | |
|---|---|---|---|---|---|---|---|
| W | 220 | L | 80.0 | M | 75.0 | r | 17.32 |
| xₘ | 1.5 | x_{L} | 6.00 | β ₚ | 5.0 | β ₘ | 3.0 |
| fₘ | 131.996 | | | | | | |
| Rₘ | 263.704 | th | 10 | R_{1H} | -1302.421 | R_{2H} | -1213.420 |
| Kₘ | 2.25434e+00 | n | 1.51922 | R_{1V} | 26.466 | R_{2V} | ∞ |
| Dₘ | -2.86539e-08 | | | K₁ | 0.00000 | K₂ | 0.00000 |
| Eₘ | 6.15671e-14 | | | D₁ | -7.59746e-09 | D₂ | -3.33379e-08 |
| Fₘ | -3.66942e-17 | | | E₁ | 1.36110e-12 | E₂ | 2.61977e-12 |
| Gₘ | 0.00000 | | | F₁ | -6.94622e-17 | F₂ | -7.43665e-17 |
| | | | | G₁ | 0.00000 | G₂ | 0.00000 |

### Example 20

| | | | | | | | |
|---|---|---|---|---|---|---|---|
| W | 220 | L | 36.0 | M | 62.5 | r | 17.32 |
| Xₘ | 1.5 | X_{L} | 2.60 | β ₚ | 5.0 | β ₘ | 3.75 |
| fₘ | 120.167 | | | | | | |
| Rₘ | 232.407 | th | 10 | R_{1H} | -450.127 | R_{2H} | -851.987 |
| Kₘ | -9.34985e+00 | n | 1.51922 | R_{1V} | 20.441 | R_{2V} | ∞ |
| Dₘ | -1.80751e-07 | | | K₁ | 0.00000 | K₂ | 0.00000 |
| Eₘ | 1.03536e-10 | | | D₁ | 3.13383e-08 | D₂ | -3.63835e-07 |
| Fₘ | -4.37516e-14 | | | E₁ | -6.82411e-12 | E₂ | 3.08486e-11 |
| Gₘ | 7.92061e-18 | | | F₁ | 1.15113e-15 | F₂ | -2.97136e-15 |
| | | | | G₁ | -6.99536e-20 | G₂ | 1.02164e-19. |

### Example 21

| | | | | | | | |
|---|---|---|---|---|---|---|---|
| W | 220 | L | 60.0 | M | 35.0 | r | 17.32 |
| xₘ | 1.5 | X_{L} | 5.75 | β ₚ | 5.0 | β ₘ | 0.75 |
| fₘ | 120.639 | | | | | | |
| Rₘ | 229.793 | th | 10 | R_{1H} | -581.002 | R_{2H} | -1609.465 |
| Kₘ | 2.25008e+00 | n | 1.51922 | R_{1V} | 30.395 | R_{2V} | ∞ |
| Dₘ | -8.94697e-08 | | | K₁ | 0.00000 | K₂ | 0.00000 |
| Eₘ | 3.86453e-12 | | | D₁ | -7.06742e-09 | D₂ | -1.75970e-07 |
| Fₘ | -2.88035e-16 | | | E₁ | 2.47273e-12 | E₂ | 1.12020e-11 |
| Gₘ | 0.00000 | | | F₁ | -2.00818e-16 | F₂ | -4.42406e-16 |
| | | | | G₁ | 0.00000 | G₂ | 0.00000 |

### Example 22

| | | | | | | | |
|---|---|---|---|---|---|---|---|
| W | 220 | L | 80.0 | M | 75.0 | r | 17.32 |
| xₘ | 1.5 | x_{L} | 6.00 | β ₚ | 5.0 | β ₘ | 3.0 |
| fₘ | 120.491 | | | | | | |
| Rₘ | 248.140 | th | 10 | R_{1H} | -1316.457 | R_{2H} | -450.985 |
| Kₘ | 1.74984e+00 | n | 1.51922 | R_{1V} | 23.482 | R_{2V} | ∞ |
| Dₘ | -2.58401e-08 | | | K₁ | 0.00000 | K₂ | 0.00000 |
| Eₘ | 6.60495e-14 | | | D₁ | -1.86170e-08 | D₂ | -2.95194e-08 |
| Fₘ | -3.13230e-17 | | | E₁ | 2.86204e-12 | E₂ | 4.58838e-12 |
| Gₘ | 0.00000 | | | F₁ | -1.31398e-16 | F₂ | -1.41288e-16 |
| | | | | G₁ | 0.00000 | G₂ | 0.00000 |

Hereinbelow, the conditions satisfied by examplary scanning optics will be described, together with the effects obtained when the conditions are satisfied.

In examples not forming part of the invention as claimed, a light flux from a light source is incident to a reflection surface of an optical deflector via a first image formation optical system. The light flux is scanned by the rotating optical deflector, and converged on a surface to be scanned via a second image formation optical system to form an image on the surface to be scanned. The curvature of field and the fθ characteristics are effectively corrected by the second image formation optical system composed of a curved mirror and a correction lens where the refractive power in the sub-scanning direction at the center thereof in the scanning direction is different from that at the periphery thereof. Thus, a small-size, inexpensive optical scanner with high resolution can be realized.

In examples not forming part of the invention as claimed, the incident surface of the correction lens is a saddle toroidal surface where a circular arc or a curve having fourth or higher order development terms which is present in a plane parallel to the scanning direction and including the optical axis is rotated around a rotational symmetric axis which is parallel to the scanning direction and is present in the plane including the optical axis. Thus, the refractive power in the sub-scanning direction at the center of the correction lens in the scanning direction can be made different from that at the periphery thereof at low cost.

In examples not forming part of the invention as claimed, the emergent surface of the correction lens is a cylindrical surface having a refracting force only in the scanning direction; an aspherical cylindrical surface having a refracting force only in the scanning direction where the section in the scanning direction has fourth or higher order development terms; or a barrel toroidal surface where a curve having fourth or higher order development terms, which is parallel to the scanning direction, and present in a place including the optical axis is rotated around a rotational symmetric axis which is parallel to the scanning direction and present in the place including the optical axis. Thus, the fθ characteristics can be effectively corrected.

In examples not forming part of the invention as claimed, when the focal length of the second image formation optical system in the scanning direction is fₘ (mm), the effective scanning width of the surface to be scanned is W (mm), the distance between the deflection point of the optical deflector and the reflection point of the curved mirror is L (mm), and the distance between the effective outermost position of the curved mirror in the scanning direction and the tangent plane of the vertex of the mirror surface is zm (mm), conditional formula (1) below is satisfied:$\text{0.159(} \frac{\text{L}}{{\text{f}}_{\text{m}}} {\text{+C}}_{\text{1}} {\text{)}}^{\text{2}} {\text{+C}}_{\text{2}} \text{-0.267<} \frac{\text{Zm}}{{\text{f}}_{\text{m}}} \text{<0.159(} \frac{\text{L}}{{\text{f}}_{\text{m}}} {\text{+C}}_{\text{1}} {\text{)}}^{\text{2}} {\text{+C}}_{\text{2}} \text{-0.257}$${\text{C}}_{\text{1}} \text{=0.388(} \frac{\text{W}}{{\text{f}}_{\text{m}}} {\text{)}}^{\text{2}} \text{-0.416} \frac{\text{W}}{{\text{f}}_{\text{m}}} \text{-0.217}$${\text{C}}_{\text{2}} \text{=0.153(} \frac{\text{W}}{{\text{f}}_{\text{m}}} {\text{)}}^{\text{2}} \text{-0.404} \frac{\text{W}}{{\text{f}}_{\text{m}}}$ Thus, the curvature of field and the fθ characteristics are effectively corrected.

In examples not forming part of the invention as claimed, the curved mirror is an axial-symmetric aspherical surface, so as to realize the precision processing easily.

In examples not forming part of the invention as claimed, when the displacement of the vertex of the curved mirror from the optical axis in the sub-scanning direction is xₘ (mm), conditional formula (2) below is satisfied. If the value exceeds the upper limit of formula (2), the corrections of the curvature of field and the fθ characteristics are difficult. If the value is less than the lower limit of formula (2), the center of the curved mirror where an error in the shape tends to occur at the processing of the mirror is within an effective practical range. This requires a fabrication process with higher precision, resulting in an increase in cost.${\text{0.5 < x}}_{\text{m}} \text{<5.0}$

In examples not forming part of the invention as claimed, when the distance between the reflection point of the curved mirror and the incident surface of the correction lens is M (mm), conditional formula (3) below is satisfied. If the value exceeds the upper limit of formula (3), the variation in the thickness of the correction lens becomes large, making it difficult to process the correction lens. If the value is less than the lower limit thereof, the corrections of the curvature of field and the fθ characteristics become difficult.$\text{0.43(1-} \frac{\text{L}}{{\text{f}}_{\text{m}}} \text{)<} \frac{\text{M}}{{\text{f}}_{\text{m}}} \text{<0.75}$

In examples not forming part of the invention as claimed, when the angle formed by the plane vertical to the reflection surface of the optical deflector and parallel to the scanning direction and the optical axis of the first image formation optical system is β_{P} (deg.), and the displacement of the center of the incident surface of the correction lens from the optical axis in the sub-scanning direction is x_{L} (mm), conditional formula (4) below is satisfied. If formula (4) is not satisfied, an aberration is generated in a light ray in an oblique direction across the pupil of the lens.$\text{0.11(} \frac{\text{L}}{{\text{f}}_{\text{m}}} \text{-0.043} \frac{\text{M}}{{\text{f}}_{\text{m}}} \text{+0.007<} \frac{{\text{5•X}}_{\text{L}}}{{\text{f}}_{\text{m}} {\text{•β}}_{\text{ρ}}} \text{<0.11} \frac{\text{L}}{{\text{f}}_{\text{m}}} \text{-0.043} \frac{\text{M}}{{\text{f}}_{\text{m}}} \text{+0.0155}$

In examples not forming part of the invention as claimed,when the angle formed by the normal to the vertex of the curved mirror and the optical axis is βₘ (deg.), conditional formula (5) below is satisfied. If formula (5) is not satisfied, the scanning lines on the surface to be scanned curve in the sub-scanning direction.$\frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} {\text{+1.5<β}}_{\text{m}} \text{·} \frac{\text{5}}{{\text{β}}_{\text{ρ}}} \text{<} \frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} \text{+4.5}$

In examples not forming part of the invention as claimed, if the value exceeds the upper limit of conditional formula (6) below, the corrections of the curvature of field and the fθ characteristics become difficult. If the value is less than the lower limit thereof, it is difficult to reduce the size of the scanning optics.$\text{1.30 <} \frac{\text{W}}{{\text{f}}_{\text{m}}} \text{< 2.13}$

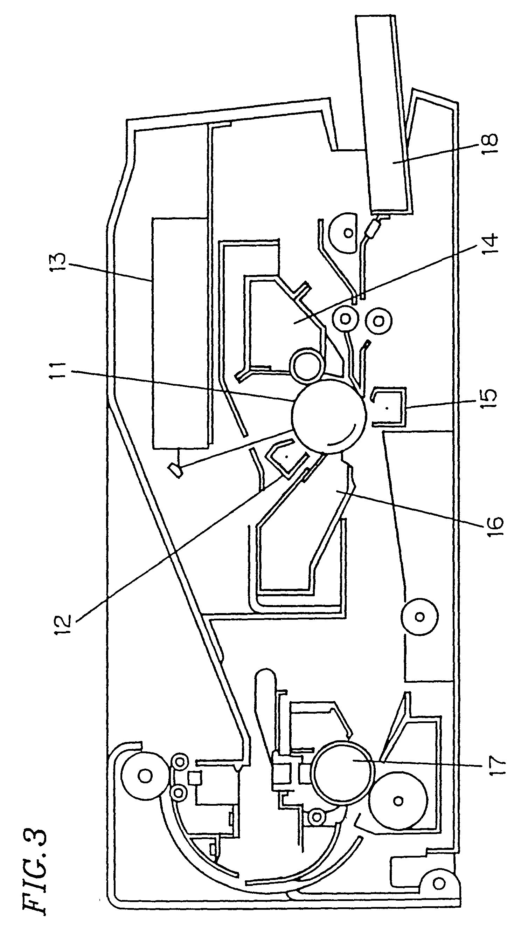

Figure **3** shows the configuration of an image formation apparatus using the scanning optics of the present invention. Referring to Figure **3**, the image formation apparatus includes a photosensitive drum **11** covered with a photosensitive body whose electric charges change when irradiated with light, a primary electrifier **12** for attaching electrostatic ions to the surface of the photosensitive body to electrify the photosensitive body, an optical scanner **13** of the present invention for writing printing information on the photosensitive drum **11,** a developer **14** for attaching electrified toner to printing portions, a transfer electrifier **15** for transferring the attached toner to a sheet, a cleaner **16** for removing remaining toner, a fixing device **17** for fixing the transferred toner to the sheet, and a feed cassette **18**.

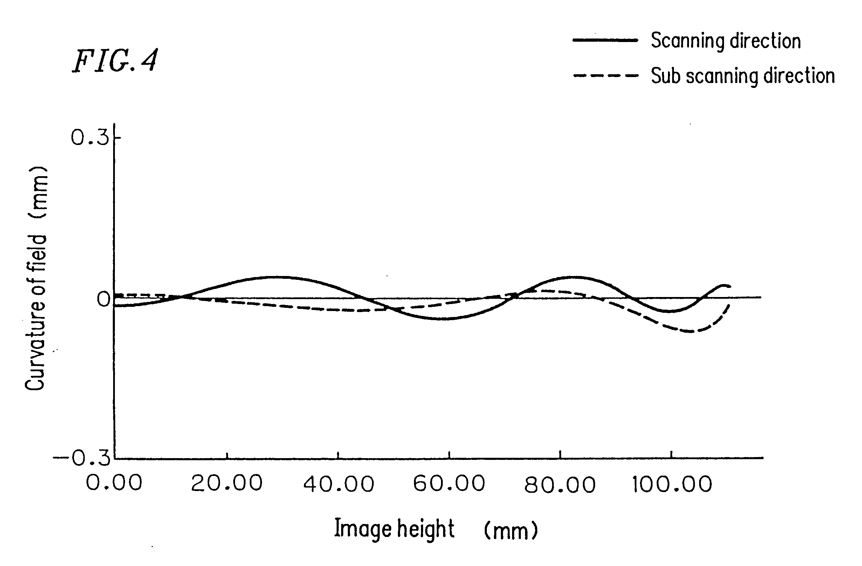

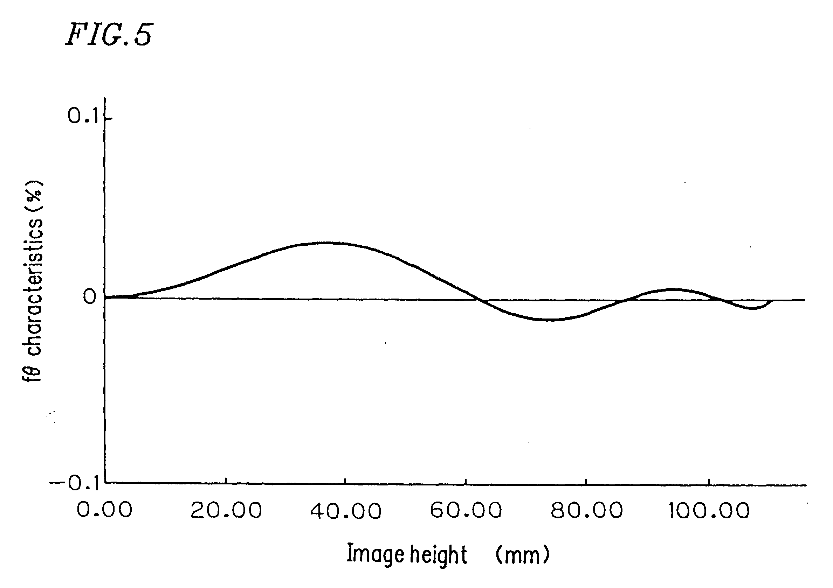

Figures **4** and **5** show the remaining curvature of field and the fθ characteristics, respectively, obtained in the scanning optics according to the present invention.

As described above, a small-size, inexpensive image formation apparatus can be realized by using the scanning optics of the present invention.

## Claims

1. An optical scanner comprising a light source (1), an optical deflector (5) for scanning a light flux from the light source, a first image formation optical system (2, 3, 4) disposed between the light source and the optical deflector, and a second image formation optical system (7,8) disposed between the optical deflector and a surface to be scanned (9), wherein the second image formation optical system includes a curved mirror (7) for reflecting a light flux from the optical deflector (5) and a correction lens (8) for converging the light flux from the curved mirror on the surface to be scanned, the refractive power in the sub-scanning direction (x) at the centre of the correction lens (8) in the scanning direction (y) being different from the refractive power in the sub-scanning direction at a periphery of the correction lens, wherein, when a distance between a reflection point of the optical deflector and a reflection point of the curved mirror is L (mm), a distance between the reflection point of the curved mirror and an incident surface of the correction lens is M (mm), and the focal length of the second image formation optical system in the scanning direction is fₘ (mm), conditional formula (3) below is satisfied:${\text{0,43(1-L/f}}_{\text{m}} {\text{) < M/f}}_{\text{m}} \text{< 0,75}$ **characterized in that** the incident surface of the correction lens (8) is a saddle toroidal surface having a profile defined by a circular arc which is present in the plane comprising the scanning direction and the optical axis of the optical system, and is rotated around a rotational symmetric axis which is parallel to the scanning direction and present in the plane including the optical axis.

2. An optical scanner according to claim 1, wherein an emergent surface of the correction lens (8) is a cylindrical surface having a refractive power only in the scanning direction.

3. An optical scanner according to claim 1, wherein an emergent surface of the correction lens (8) is a aspherical cylindrical surface which has a refractive power only in the scanning direction and the section of the surface in the scanning direction has fourth or higher order development terms.

4. An optical scanner according to claim 1, wherein, when a focal length of the second image formation optical system (7, 8) in the scanning direction is fₘ (mm), an effective scanning width of the surface to be scanned is W (mm), a distance between a deflection point of the optical deflector (5) and a reflection point of the curved mirror (7) is L (mm), and a distance between an effective outermost position of the curved mirror (7) in the scanning direction and a tangent plane of a vertex of the mirror surface is zm (mm), conditional formula (1) below is satisfied:${\text{0.159 (L/f}}_{\text{m}} {\text{C}}_{\text{1}} {\text{)}}^{\text{2}} {\text{+C}}_{\text{2}} {\text{-0.267< zm/f}}_{\text{m}} {\text{<0.159 (L/f}}_{\text{m}} {\text{+C}}_{\text{1}} {\text{)}}^{\text{2}} {\text{+C}}_{\text{2}} \text{-0.257}$ wherein${\text{C}}_{\text{1}} {\text{= 0.388 (W/f}}_{\text{m}} {\text{)}}^{\text{2}} {\text{-0.416 (W/f}}_{\text{m}} \text{)-0.217}$${\text{C}}_{\text{2}} {\text{=-0.153(W/f}}_{\text{m}} {\text{)}}^{\text{2}} {\text{+0.404(W/f}}_{\text{m}} \text{).}$

5. An optical scanner according to claim 1, wherein the curved mirror (7) has an axial-symmetric aspherical surface.

6. An optical scanner according to claim 1, wherein, when a displacement of a vertex of the curved mirror (7) from an optical axis is xₘ(mm), conditional formula (2) below is satisfied:${\text{0.5< x}}_{\text{m}} \text{<5.0}$

7. An optical scanner according to claim 1, wherein an angle formed by a plane vertical to a reflection surface of the optical deflector and parallel to the scanning direction and an optical axis of the first image formation optical system is β_{P} (deg.), a distance between a reflection point of the optical deflector and a reflection point of the curved mirror is L (mm), a distance between the reflection point of the curved mirror and the incident surface of the correction lens is M (mm), a focal length of the second image formation optical system in the scanning direction is fₘ (mm), and a displacement of a center of the incident surface of the correction lens from the optical axis in the sub-scanning direction is x_{L} (mm), conditional formula (4) below is satisfied:$\text{0.11} \frac{\text{L}}{{\text{f}}_{\text{m}}} \text{-0.043} \frac{\text{M}}{{\text{f}}_{\text{m}}} \text{+0.0007<} \frac{{\text{5•X}}_{\text{L}}}{{\text{f}}_{\text{m}} {\text{•β}}_{\text{ρ}}} \text{<0.11} \frac{\text{L}}{{\text{f}}_{\text{m}}} \text{-0.043} \frac{\text{M}}{{\text{f}}_{\text{m}}} \text{+0.0155}$

8. An optical scanner according to claim 1, wherein an angle formed by a plane vertical to a reflection surface of the optical deflector and parallel to the scanning direction and an optical axis of the first image formation optical system is β_{P} (deg.), a distance between a reflection point of the optical deflector and a reflection point of the curved mirror is L (mm), a distance between the reflection point of the curved mirror and an incident surface of the correction lens is M (mm), a focal length of the second image formation optical system in the scanning direction is fₘ (mm), and an angle formed by a normal to a vertex of the curved mirror and the optical axis is βₘ (deg.), conditional formula (5) below is satisfied:$\frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} {\text{+1.5<β}}_{\text{m}} \text{·} \frac{\text{5}}{{\text{β}}_{\text{ρ}}} \text{<} \frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} \text{+4.5}$

9. An optical scanner according to claim 1, wherein a focal length of the second image formation optical system in the scanning direction is fₘ (mm), and an effective scanning width of the surface to be scanned is W (mm), conditional formula (6) below is satisfied:$\text{1.30 <} \frac{\text{W}}{{\text{f}}_{\text{m}}} \text{< 2.13}$

10. An optical scanner comprising a light source (1), an optical deflector (5) for scanning a light flux from the light source, a first image formation optical system (2, 3, 4) disposed between the light source (1) and the optical deflector, and a second image formation optical system (7, 8) disposed between the optical deflector and a surface to be scanned (9), wherein the second image formation optical system includes a curved mirror (7) for reflecting a light flux from the optical deflector (5) and a correction lens (8) for correcting the light flux from the curved mirror on the surface to be scanned, the refractive power in the sub-scanning direction (x) at the center of the correction lens in the scanning direction (y) being different from the refractive power in the sub-scanning direction at the periphery of the correction lens, **characterized in that** the incident surface of the correction lens (8) is a saddle toroidal surface having a profile defined by a curve having fourth or higher order development terms which is present in the plane comprising the scanning direction and the optical axis of the optical system, and is rotated around a rotational symmetric axis which is parallel to the scanning direction and is present in the plane including the optical axis.

11. An optical scanner according to claim 10, wherein an emergent surface of the correction lens is a cylindrical surface having a refractive power only in the scanning direction.

12. An optical scanner according to claim 11, wherein an emergent surface of the correction lens is a aspherical cylindrical surface which has a refractive power only in the scanning direction and the section of the surface in the scanning direction has fourth or higher order development terms.

13. An optical scanner according to claim 12, wherein, when a focal length of the second image formation optical system in the scanning direction is fₘ (mm), an effective scanning width of the surface to be scanned is W (mm), a distance between a deflection point of the optical deflector and a reflection point of the curved mirror is L (mm), and a distance between an effective outermost position of the curved mirror in the scanning direction and a tangent plane of a vertex of the mirror surface is zm (mm), conditional formula (1) below is satisfied:$\text{0.159(} \frac{\text{L}}{{\text{f}}_{\text{m}}} {\text{+C}}_{\text{1}} {\text{)}}^{\text{2}} {\text{+C}}_{\text{2}} \text{-0.267<} \frac{\text{Zm}}{{\text{f}}_{\text{m}}} \text{<0.159(} \frac{\text{L}}{{\text{f}}_{\text{m}}} {\text{+C}}_{\text{1}} {\text{)}}^{\text{2}} {\text{+C}}_{\text{2}} \text{-0.257}$ wherein${\text{C}}_{\text{1}} \text{=0.388(} \frac{\text{W}}{{\text{f}}_{\text{m}}} {\text{)}}^{\text{2}} \text{-0.416} \frac{\text{W}}{{\text{f}}_{\text{m}}} \text{-0.217}$${\text{C}}_{\text{2}} \text{=0.153(} \frac{\text{W}}{{\text{f}}_{\text{m}}} {\text{)}}^{\text{2}} \text{-0.404} \frac{\text{W}}{{\text{f}}_{\text{m}}}$

14. An optical scanner according to claim 13, wherein, when a displacement of a vertex of the curved mirror from an optical axis is xₘ (mm), conditional formula (2) below is satisfied:${\text{0.5 < x}}_{\text{m}} \text{<5.0}$

15. An optical scanner according to claim 14, wherein, when a distance between a reflection point of the optical deflector and a reflection point of the curved mirror is L (mm), a distance between the reflection point of the curved mirror and an incident surface of the correction lens is M (mm), and the focal length of the second image formation optical system in the scanning direction is fₘ (mm), conditional formula (3) below is satisfied:$\text{0,43(1-} \frac{\text{L}}{{\text{f}}_{\text{m}}} \text{) <} \frac{\text{M}}{{\text{f}}_{\text{m}}} \text{< 0,75}$

16. An optical scanner according to claim 15, wherein an angle formed by a plane vertical to a reflection surface of the optical deflector and parallel to the scanning direction and an optical axis of the first image formation optical system is β_{P} (deg.), a distance between a reflection point of the optical deflector and a reflection point of the curved mirror is L (mm), a distance between the reflection point of the curved mirror and the incident surface of the correction lens is M (mm), a focal length of the second image formation optical system in the scanning direction is fₘ (mm), and a displacement of a center of the incident surface of the correction lens from the optical axis in the sub-scanning direction is x_{L} (mm), conditional formula (4) below is satisfied:$\text{0.11} \frac{\text{L}}{{\text{f}}_{\text{m}}} \text{-0.043} \frac{\text{M}}{{\text{f}}_{\text{m}}} \text{+0.0007<} \frac{{\text{5•X}}_{\text{L}}}{{\text{f}}_{\text{m}} {\text{•β}}_{\text{ρ}}} \text{<0.11} \frac{\text{L}}{{\text{f}}_{\text{m}}} \text{-0.043} \frac{\text{M}}{{\text{f}}_{\text{m}}} \text{+0.0155}$

17. An optical scanner according to claim 16, wherein an angle formed by a plane vertical to a reflection surface of the optical deflector and parallel to the scanning direction and an optical axis of the first image formation optical system is β_{P} (deg.), a distance between a reflection point of the optical deflector and a reflection point of the curved mirror is L (mm), a distance between the reflection point of the curved mirror and an incident surface of the correction lens is M (mm), a focal length of the second image formation optical system in the scanning direction is fₘ (mm), and an angle formed by a normal to a vertex of the curved mirror and the optical axis is βₘ (deg.), conditional formula (5) below is satisfied:$\frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} {\text{+1.5<β}}_{\text{m}} \text{·} \frac{\text{5}}{{\text{β}}_{\text{ρ}}} \text{<} \frac{\text{0.31}}{\frac{\text{L}}{{\text{f}}_{\text{m}}} \text{-0.162}} \text{-} \frac{\text{(} \frac{\text{M}}{{\text{f}}_{\text{m}}} {\text{-0.738)}}^{\text{2}}}{\text{0.42(} \frac{\text{L}}{{\text{f}}_{\text{m}}} {\text{)}}^{\text{2}} \text{+0.00272}} \text{+4.5}$

18. An optical scanner according to claim 17, wherein a focal length of the second image formation optical system in the scanning direction is fₘ (mm), and an effective scanning width of the surface to be scanned is W (mm), conditional formula (6) below is satisfied:$\text{1.30 <} \frac{\text{W}}{{\text{f}}_{\text{m}}} \text{< 2.13}$

19. An image formation apparatus using the optical scanner according to claim 1.

## Patentansprüche

1. Optischer Scanner bzw. Abtaster mit einer Lichtquelle (1) einem optischen Deflektor bzw. Ablenkungsvorrichtung (5) zum Scannen bzw. Abtasten eines Lichtstromes (light flux) von der Lichtquelle, einem ersten optischen Bildformungssystem (2, 3, 4), welches zwischen der Lichtquelle und dem optischen Deflektor angeordnet ist, und einem zweiten optischen Bildformungssystem (7, 8), welches zwischen dem optischen Deflektor und einer abzutastenden bzw. scannenden Oberfläche (9) angeordnet ist, wobei das zweite optische Bildformungssystem einen gekrümmten Spiegel (7) umfasst zum Reflektieren eines Lichtstromes von dem optischen Deflektor (5) und eine Korrekturlinse (8) zum Konvergieren bzw. Bündeln des Lichtstromes von dem gekrümmten Spiegel auf die abzutastende bzw. zu scannende Oberfläche, das Brechungsvermögen in der Neben-Scan (sub-scanning) Richtung (x) bei einer Mitte der Korrekturlinse (8) in einer Abtast- bzw. Scan-Richtung (y) ist verschieden von dem Brechungsvermögen in der Neben-Scan-Richtung bei einem Umfang der Korrekturlinse,
wobei wenn ein Abstand zwischen einem Reflexionspunkt des optischen Deflektors bzw. Ablenkungsvorrichtung und einem Reflexionspunkt des gekrümmten Spiegels L(mm) ist, ein Abstand zwischen dem Reflexionspunkt des gekrümmten Spiegels und einer Einfallsoberfläche der Korrekturlinse M(mm) ist, und die Brennweite des zweiten optischen Bildformungssystem in der Scan-Richtung fₘ(mm) ist, ist die nachfolgende Ungleichung bzw. konditionale Formel (3) erfüllt${\text{0,43(1-L/f}}_{\text{m}} {\text{) < (M/f}}_{\text{m}} \text{) < 0,75}$ **dadurch gekennzeichnet, dass** die Einfallsoberfläche der Korrekturlinse (8) eine ring- bzw. torusförmige Satteloberfläche ist mit einem Profil definiert durch einen kreisförmigen Bogen, welcher in der Ebene liegt, welche die Scan-Richtung aufweist und die optische Achse des optischen Systems umfasst und um eine drehsymmetrische Achse gedreht ist, welche parallel zu der Scan-Richtung ist und in der Ebene liegt, welche die optische Achse umfasst.

2. Optischer Scanner nach Anspruch 1, wobei eine auftauchende bzw. vorstehende Oberfläche der Korrekturlinse (8) eine zylinderförmige Oberfläche ist, welche ein Brechungsvermögen nur in der Scan-Richtung aufweist.

3. Optischer Scanner nach Anspruch 1, wobei eine auftauchende bzw. vorstehende Oberfläche der Korrekturlinse (8) eine asphärische zylinderförmige Oberfläche, welche ein Brechungsvermögen nur in der Scan-Richtung hat und der Abschnitt der Oberfläche in der Scan-Richtung hat Entwicklungs-Terme vierter oder höherer Ordnung.

4. Optischer Scanner nach Anspruch 1, wobei wenn eine Brennweite des zweiten optischen Bildformungssystems (7, 8) in der Scan-Richtung fₘ(mm) ist, eine effektive Scan- bzw. Abtast-Breite der abzutastenden Oberfläche W(mm) ist, ein Abstand zwischen einem Ablenkungs- bzw. Deflektions-Punkt des optischen Deflektors bzw. Ablenkungsvorrichtung (5) und ein Reflexionspunkt des gekrümmten Spiegels (7) L(mm) ist, und ein Abstand zwischen einer effektiven äußersten Position des gekrümmten Spiegels (7) in der Scan- bzw. Abtastrichtung und einer Tangentialebene eines Scheitel- bzw. Eckpunktes der Spiegeloberfläche zm(mm) ist, ist folgende Ungleichung bzw. Konditionalformel (1) erfüllt:${\text{0,159(L/f}}_{\text{m}} {\text{+C}}_{\text{1}} {\text{)}}^{\text{2}} {\text{+C}}_{\text{2}} {\text{-0,267<zm/f}}_{\text{m}} {\text{<0,159(L/f}}_{\text{m}} {\text{+C}}_{\text{1}} {\text{)}}^{\text{2}} {\text{+C}}_{\text{2}} \text{-0,257}$ wobei${\text{C}}_{\text{1}} {\text{= 0,388(W/f}}_{\text{m}} {\text{)}}^{\text{2}} {\text{-0,416(W/f}}_{\text{m}} \text{)-0,217}$${\text{C}}_{\text{2}} {\text{= 0,153(W/f}}_{\text{m}} {\text{)}}^{\text{2}} {\text{+0,404(W/f}}_{\text{m}} \text{).}$

5. Optischer Scanner nach Anspruch 1, wobei der gekrümmte Spiegel (7) eine axialsymmetrische asphärische Oberfläche hat.

6. Optischer Scanner nach Anspruch 1, wobei wenn ein Abstand bzw. eine Verschiebung eines Scheitel- bzw. Eckpunktes des gekrümmten Spiegels (7) von einer optischen Achse xₘ(mm) ist, ist nachfolgende Konditionalformel (2) erfüllt:${\text{0,5 < x}}_{\text{m}} \text{< 5,0}$

7. Optischer Scanner nach Anspruch 1, wobei ein Winkel β_{P} (Grad) ist, welcher gebildet wird durch eine Ebene senkrecht zu einer Reflexionsoberfläche des optischen Deflektors bzw. Ablenkungsvorrichtung und parallel zu der Scan- bzw. Abtast-Richtung und einer optischen Achse des ersten optischen Bildformungssystems, ein Abstand zwischen einem Reflexionspunkt des optischen Deflektors bzw. Ablenkungsvorrichtung und einem Reflexionspunkt des gekrümmten Spiegel ist L(mm), ein Abstand zwischen dem Reflexionspunkt des gekrümmten Spiegel und der Einfallsoberfläche der Korrekturlinse ist M(mm), eine Brennweite des zweiten optischen Bildformungssystems in der Scan- bzw. Abtast-Richtung ist fₘ(mm), und ein Abstand bzw. eine Verschiebung eines Mittelpunkts der Einfallsoberfläche der Korrekturlinse von der optischen Achse in der Neben-Scan-Richtung ist x_{L}(mm), und die folgende Konditionalformel (4) ist erfüllt$\text{0.11} \frac{\text{L}}{{\text{f}}_{\text{m}}} \text{-0.043} \frac{\text{M}}{{\text{f}}_{\text{m}}} \text{+0.0007<} \frac{{\text{5•X}}_{\text{L}}}{{\text{f}}_{\text{m}} {\text{•β}}_{\text{ρ}}} \text{<0.11} \frac{\text{L}}{{\text{f}}_{\text{m}}} \text{-0.043} \frac{\text{M}}{{\text{f}}_{\text{m}}} \text{+0.0155}$

8. Optischer Scanner nach Anspruch 1, wobei ein Winkel, welcher gebildet wird durch eine Ebene senkrecht zu einer Reflexionsoberfläche des optischen Deflektors bzw. Ablenkungsvorrichtung und parallel zu der Scan-Richtung und einer optischen Achse des ersten optischen Bildformungssystems ist β_{P} (Grad), ein Abstand zwischen einem Reflexionspunkt des optischen Deflektors und einem Reflexionspunkt des gekrümmten Spiegels ist L(mm), ein Abstand zwischen dem Reflexionspunkt des gekrümmte Spiegels und einer Einfallsoberfläche der Korrekturlinse ist M(mm), eine Brennweite des zweiten optischen Bildformungssystems in der Scan-Richtung ist fₘ(mm), und ein Winkel, welcher ausgebildet wird durch eine Senkrechte zu einem Scheitelpunkt bzw. Eckpunkt des gekrümmten Spiegels und der optischen Achse ist βₘ (Grad), wobei die nachfolgende Konditionalformel (5) erfüllt ist:$\frac{\text{0,31}}{\frac{\text{L}}{{\text{f}}_{\text{m}}} \text{0,162}} \text{-} \frac{\text{(} \frac{\text{M}}{{\text{f}}_{\text{m}}} {\text{0,738)}}^{\text{2}}}{\text{0,42(} \frac{\text{L}}{{\text{f}}_{\text{m}}} {\text{)}}^{\text{2}} \text{+0,00272}} {\text{+1,5<β}}_{\text{m}} \text{·} \frac{\text{5}}{{\text{β}}_{\text{ρ}}} \text{<} \frac{\text{0,31}}{\frac{\text{L}}{{\text{f}}_{\text{m}}} \text{0,162}} \text{-} \frac{\text{(} \frac{\text{M}}{{\text{f}}_{\text{m}}} {\text{0,738)}}^{\text{2}}}{\text{0,42(} \frac{\text{L}}{{\text{f}}_{\text{m}}} {\text{)}}^{\text{2}} \text{+0,00272}} \text{+4,5}$

9. Optischer Scanner nach Anspruch 1, wobei eine Brennweite des zweiten optischen Bildformungssystems in der Scan-Richtung fₘ(mm) ist, und eine effektive Scan- bzw. Abtast-Breite der abzutastenden Oberfläche ist W(mm), wobei die nachfolgende Konditionalformel (6) erfüllt ist$\text{1.30 <} \frac{\text{W}}{{\text{f}}_{\text{m}}} \text{< 2.13}$

10. Optischer Scanner bzw. Abtaster mit einer Lichtquelle (1), einem optischen Deflektor bzw. Ablenkungsvorrichtung (5) zum Scannen bzw. Abtasten eines Lichtstromes (light flux) von der Lichtquelle, einem ersten optischen Bildformungssystem (2, 3, 4), welches zwischen der Lichtquelle (1) und dem optischen Deflektor angeordnet ist, und, einem zweiten optischen Bildformungssystem (7, 8), welches zwischen dem optischen Deflektor und einer abzutastenden bzw. scannenden Oberfläche (9) angeordnet ist, wobei das zweite optische Bildformungssystem einen gekrümmten Spiegel (7) umfasst zum Reflektieren eines Lichtstromes von dem optischen Deflektor (5) und eine Korrekturlinse (8) zum Korrigieren bzw. Konvergieren bzw. Bündeln des Lichtstromes von dem gekrümmten Spiegel auf die abzutastende bzw. zu scannende Oberfläche, das Brechungsvermögen in der Neben-Scan (sub-scanning) Richtung (x) bei der Mitte der Korrekturlinse in der Abtast- bzw. Scan-Richtung (y) ist verschieden von dem Brechungsvermögen in der Neben-Scan-Richtung bei dem Umfang der Korrekturlinse,
**dadurch gekennzeichnet, dass**
die Einfallsoberfläche der Korrekturlinse (8) eine torusförmige bzw. Ring-Sattel-Oberfläche ist, mit einem Profil, welches definiert ist durch eine Kurve mit Entwicklungs-Thermen vierter oder höherer Ordnung, welche in der Ebene vorliegt, welche die Scan- bzw. Abtast-Richtung und die optische Achse des optischen Systems enthält, und gedreht ist um eine drehsymmetrische Achse, welche parallel ist zu der Scan- bzw. Abtast-Richtung und in der Ebene liegt, welche die optische Achse umfasst.

11. Optischer Scanner, nach Anspruch 10, wobei eine auftauchende bzw. vorstehende Oberfläche der Korrekturlinse (8) eine zylinderförmige Oberfläche ist, welche ein Brechungsvermögen nur in der Scan-Richtung aufweist

12. Optischer Scanner nach Anspruch 11, wobei eine auftauchende bzw. vorstehende Oberfläche der Korrekturlinse eine asphärische zylinderförmige Oberfläche ist, welche ein Brechungsvermögen nur in der Scan-Richtung hat und der Abschnitt der Oberfläche in der Scan-Richtung hat Entwicklungs-Terme vierter oder höherer Ordnung.

13. Optischer Scanner nach Anspruch 12, wobei wobei wenn eine Brennweite des zweiten optischen Bildformungssystems in der Scan-Richtung fₘ(mm) ist, eine effektive Scan- bzw. Abtast-Breite der abzutastenden Oberfläche W(mm) ist, ein Abstand zwischen einem Ablenkungs- bzw. Deflektions-Punkt des optischen Deflektors bzw. Ablenkungsvorrichtung und einem Reflexionspunkt des gekrümmten Spiegels ist L(mm) ist, und ein Abstand zwischen einer effektiven äußersten Position des gekrümmten Spiegels in der Scan- bzw. Abtastrichtung und einer Tangentialebene eines Scheitel- bzw. Eckpunktes der Spiegeloberfläche zm(mm) ist, ist folgende Ungleichung bzw. Konditionalformel (1) erfüllt:${\text{0,159(L/f}}_{\text{m}} {\text{+C}}_{\text{1}} {\text{)}}^{\text{2}} {\text{+C}}_{\text{2}} {\text{-0,267<zm/f}}_{\text{m}} {\text{<0,159(L/f}}_{\text{m}} {\text{+C}}_{\text{1}} {\text{)}}^{\text{2}} {\text{+C}}_{\text{2}} \text{-0,257}$ wobei${\text{C}}_{\text{1}} {\text{= 0,388(W/f}}_{\text{m}} {\text{)}}^{\text{2}} {\text{-0,416(W/f}}_{\text{m}} \text{)-0,217}$${\text{C}}_{\text{2}} {\text{= 0,153(W/f}}_{\text{m}} {\text{)}}^{\text{2}} {\text{+0,404(W/f}}_{\text{m}} \text{).}$

14. Optischer Scanner nach Anspruch 13, wobei wenn ein Abstand bzw. eine Verschiebung eines Scheitel- bzw. Eckpunktes des gekrümmten Spiegels von einer optischen Achse xₘ(mm) ist, ist nachfolgende Konditionalformel (2) erfüllt:${\text{0,5 < x}}_{\text{m}} \text{< 5,0}$

15. Optischer Scanner nach Anspruch 14, wobei wenn ein Abstand zwischen einem Reflexionspunkt des optischen Deflektors bzw. Ablenkungsvorrichtung und einem Reflexionspunkt des gekrümmten Spiegels L(mm) ist, ein Abstand zwischen dem Reflexionspunkt des gekrümmten Spiegels und einer Einfallsoberfläche der Korrekturlinse M(mm) ist, und die Brennweite des zweiten optischen Bildformungssystems in der Scan-Richtung fₘ(mm) ist, ist die nachfolgende Ungleichung bzw. Konditionalformel (3) erfüllt:$\text{0,43(1-} \frac{\text{L}}{{\text{f}}_{\text{m}}} \text{) <} \frac{\text{L}}{{\text{f}}_{\text{m}}} \text{< 0,75}$

16. Optischer Scanner nach Anspruch 15, wobei ein Winkel β_{P} (Grad) ist, welcher gebildet wird durch eine Ebene senkrecht zu einer Reflexionsoberfläche des optischen Deflektors bzw. Ablenkungsvorrichtung und parallel zu der Scan- bzw. Abtast-Richtung und einer optischen Achse des ersten optischen Bildformungssystems, ein Abstand zwischen einem Reflexionspunkt des optischen Deflektors bzw. Ablenkungsvorrichtung und einem Reflexionspunkt des gekrümmten Spiegel ist L(mm), ein Abstand zwischen dem Reflexionspunkt des gekrümmten Spiegel und der Einfallsoberfläche der Korrekturlinse ist M(mm), eine Brennweite des zweiten optischen Bildformungssystems in der Scan- bzw. Abtast-Richtung ist fₘ(mm), und ein Abstand bzw. eine Verschiebung eines Mittelpunkts der Einfallsoberfläche der Korrekturlinse von der optischen Achse in der Neben-Scan-Richtung ist x_{L}(mm), und die folgende Konditionalformel (4) ist erfüllt::$\text{0.11} \frac{\text{L}}{{\text{f}}_{\text{m}}} \text{-0.043} \frac{\text{M}}{{\text{f}}_{\text{m}}} \text{+0.0007<} \frac{{\text{5•X}}_{\text{L}}}{{\text{f}}_{\text{m}} {\text{•β}}_{\text{ρ}}} \text{<0.11} \frac{\text{L}}{{\text{f}}_{\text{m}}} \text{-0.043} \frac{\text{M}}{{\text{f}}_{\text{m}}} \text{+0.0155}$

17. Optischer Scanner nach Anspruch 16, wobei ein Winkel, welcher gebildet wird durch eine Ebene senkrecht zu einer Reflexionsoberfläche des optischen Deflektors bzw. Ablenkungsvorrichtung und parallel zu der Scan-Richtung und einer optischen Achse des ersten optischen Bildformungssystems ist β_{P} (Grad), ein Abstand zwischen einem Reflexionspunkt des optischen Deflektors und einem Reflexionspunkt des gekrümmten Spiegels ist L(mm), ein Abstand zwischen dem Reflexionspunkt des gekrümmte Spiegels und einer Einfallsoberfläche der Korrekturlinse ist M(mm), eine Brennweite des zweiten optischen Bildformungssystems in der Scan-Richtung ist fₘ(mm), und ein Winkel, welcher ausgebildet wird durch eine Senkrechte zu einem Scheitelpunkt bzw. Eckpunkt des gekrümmten Spiegels und der optischen Achse ist βₘ (Grad), wobei die nachfolgende Konditionalformel (5) erfüllt ist:$\frac{\text{0,31}}{\frac{\text{L}}{{\text{f}}_{\text{m}}} \text{0,162}} \text{-} \frac{\text{(} \frac{\text{M}}{{\text{f}}_{\text{m}}} {\text{0,738)}}^{\text{2}}}{\text{0,42(} \frac{\text{L}}{{\text{f}}_{\text{m}}} {\text{)}}^{\text{2}} \text{+0,00272}} {\text{+1,5<β}}_{\text{m}} \text{·} \frac{\text{5}}{{\text{β}}_{\text{ρ}}} \text{<} \frac{\text{0,31}}{\frac{\text{L}}{{\text{f}}_{\text{m}}} \text{0,162}} \text{-} \frac{\text{(} \frac{\text{M}}{{\text{f}}_{\text{m}}} {\text{0,738)}}^{\text{2}}}{\text{0,42(} \frac{\text{L}}{{\text{f}}_{\text{m}}} {\text{)}}^{\text{2}} \text{+0,00272}} \text{+4,5}$

18. Optischer Scanner nach Anspruch 17, wobei eine Brennweite des zweiten optischen Bildformungssystems in der Scan-Richtung fₘ(mm) ist, und eine effektive Scan- bzw. Abtast-Breite der abzutastenden Oberfläche ist W(mm), wobei die nachfolgende Konditionalformel (6) erfüllt ist$\text{1.30 <} \frac{\text{W}}{{\text{f}}_{\text{m}}} \text{< 2.13}$

19. Bildformungsvorrichtung, welche den optischen Scanner nach Anspruch 1 verwendet

## Revendications

1. Dispositif de balayage optique comprenant une source de lumière (1), un déflecteur optique (5) destiné à balayer un flux de lumière provenant de la source de lumière, un premier système optique de formation d'image (2, 3, 4) disposé entre la source de lumière et le déflecteur optique, et un second système optique de formation d'image (7, 8) disposé entre le déflecteur optique et une surface devant être balayée (9), dans lequel le second système optique de formation d'image comprend un miroir incurvé (7) destiné à réfléchir un flux de lumière provenant du déflecteur optique (5) et une lentille de correction (8) destinée à faire converger le flux de lumière provenant du miroir incurvé sur la surface devant être balayée, le pouvoir convergent dans la direction de balayage secondaire (x) au centre de la lentille de correction (8) dans la direction de balayage (y) étant différent du pouvoir convergent dans la direction de balayage secondaire à une périphérie de la lentille de correction, où, lorsqu'une distance entre un point de réflexion du déflecteur optique et un point de réflexion du miroir incurvé est L (mm), une distance entre le point de réflexion du miroir incurvé et une surface d'incidence de la lentille de correction est M (mm), et la distance focale du second système optique de formation d'image dans la direction de balayage est fₘ (mm), la formule conditionnelle (3) ci-dessous est satisfaite :${\text{0,43(1-L/f}}_{\text{m}} {\text{) < M/f}}_{\text{m}} \text{< 0,75}$ **caractérisé en ce que** la surface d'incidence de la lentille de correction (8) est une surface toroïdale en forme de selle présentant un profil défini par un arc circulaire qui est présent dans le plan comprenant la direction de balayage et l'axe optique du système optique et est entraîné en rotation autour d'un axe de symétrie en rotation qui est parallèle à la direction de balayage et présent dans le plan comprenant l'axe optique.

2. Dispositif de balayage optique selon la revendication 1, dans lequel une surface d'émergence de la lentille de correction (8) est une surface cylindrique présentant un pouvoir convergent uniquement dans la direction de balayage.

3. Système de balayage optique selon la revendication 1, dans lequel une surface d'émergence de la lentille de correction (8) est une surface cylindrique asphérique qui présente un pouvoir convergent uniquement dans la direction de balayage et la section de la surface dans la direction de balayage présente des termes de développement du quatrième ordre ou plus.

4. Dispositif de balayage optique selon la revendication 1, dans lequel, lorsqu'une distance focale du second système optique de formation d'image (7, 8) dans la direction de balayage est fₘ (mm), une largeur de balayage effective de la surface devant être balayée est W (mm), une distance entre un point de déflexion du déflecteur optique (5) et un point de réflexion du miroir incurvé (7) est L (mm), et une distance entre une position effective la plus à l'extérieur du miroir incurvé (7) dans la direction de balayage et un plan tangent d'un sommet de la surface du miroir est zm (mm), la formule conditionnelle (1) ci-dessous est satisfaite :${\text{0,159 (L/f}}_{\text{m}} {\text{+C}}_{\text{1}} {\text{)}}^{\text{2}} {\text{+C}}_{\text{2}} {\text{-0,267 < zm/f}}_{\text{m}} {\text{< 0,159(L/f}}_{\text{m}} {\text{+C}}_{\text{1}} {\text{)}}^{\text{2}} {\text{+C}}_{\text{2}} \text{-0,257}$ dans laquelle${\text{C}}_{\text{1}} {\text{= 0,388(W/f}}_{\text{m}} {\text{)}}^{\text{2}} {\text{-0,416(W/f}}_{\text{m}} \text{)-0,217}$${\text{C}}_{\text{2}} {\text{= -0,153(W/f}}_{\text{m}} {\text{)}}^{\text{2}} {\text{+0,404(W/f}}_{\text{m}} \text{).}$

5. Dispositif de balayage optique selon la revendication 1, dans lequel le miroir incurvé (7) présente une surface asphérique à symétrie axiale.

6. Dispositif de balayage optique selon la revendication 1, dans lequel, lorsqu'un déplacement d'un sommet du miroir incurvé (7) à partir d'un axe optique est xₘ (mm), la formule conditionnelle (2) ci-dessous est satisfaite :${\text{0,5< X}}_{\text{m}} \text{<5,0}$

7. Dispositif de balayage optique selon la revendication 1, dans lequel un angle formé par un plan vertical à une surface de réflexion du déflecteur optique et parallèle à la direction de balayage et à un axe optique du premier système optique de formation d'image est β_{P} (degré), une distance entre un point de réflexion du déflecteur optique et un point de réflexion du miroir incurvé est L (mm), une distance entre le point de réflexion du miroir incurvé et la surface d'incidence de la lentille de correction est M (mm), une distance focale du second système optique de formation d'image dans la direction de balayage est fₘ (mm), et un déplacement d'un centre de la surface d'incidence de la lentille de correction depuis l'axe optique dans la direction de balayage de secondaire est x_{L} (mm), la formule conditionnelle (4) ci-dessous est satisfaite :$\text{0,11} \frac{\text{L}}{{\text{f}}_{\text{m}}} \text{-0,043} \frac{\text{M}}{{\text{f}}_{\text{m}}} \text{+0,0007<} \frac{{\text{5•X}}_{\text{L}}}{{\text{f}}_{\text{m}} {\text{•β}}_{\text{ρ}}} \text{<0,11} \frac{\text{L}}{{\text{f}}_{\text{m}}} \text{-0,043} \frac{\text{M}}{{\text{f}}_{\text{m}}} \text{+0,0155}$

8. Dispositif de balayage optique selon la revendication 1, dans lequel un angle formé par un plan vertical à une surface de réflexion du déflecteur optique et parallèle à la direction de balayage et à un axe optique du premier système optique de formation d'image est β_{P} (degré), une distance entre un point de réflexion du déflecteur optique et un point de réflexion du miroir incurvé est L (mm), une distance entre le point de réflexion du miroir incurvé et une surface d'incidence de la lentille de correction est M (mm), une distance focale du second système optique de formation d'image dans la direction de balayage est fₘ (mm), et un angle formé par une normale à un sommet du miroir incurvé et l'axe optique est βₘ (degré), la formule conditionnelle (5) ci-dessous est satisfaite :$\frac{\text{0,31}}{\frac{\text{L}}{{\text{f}}_{\text{m}}} \text{-0,162}} \text{-} \frac{\text{(} \frac{\text{M}}{{\text{f}}_{\text{m}}} {\text{-0,738)}}^{\text{2}}}{\text{0,42(} \frac{\text{L}}{{\text{f}}_{\text{m}}} {\text{)}}^{\text{2}} \text{+0,00272}} {\text{+1,5<β}}_{\text{m}} \text{·} \frac{\text{5}}{{\text{β}}_{\text{ρ}}} \text{<} \frac{\text{0,31}}{\frac{\text{L}}{{\text{f}}_{\text{m}}} \text{-0,162}} \text{-} \frac{\text{(} \frac{\text{M}}{{\text{f}}_{\text{m}}} {\text{-0,738)}}^{\text{2}}}{\text{0,42(} \frac{\text{L}}{{\text{f}}_{\text{m}}} {\text{)}}^{\text{2}} \text{+0,00272}} \text{+4,5}$

9. Dispositif de balayage optique selon la revendication 1, dans lequel une distance focale du second système optique de formation d'image dans la direction de balayage est fₘ (mm), et une largeur de balayage effective de la surface devant être balayée est W (mm), la formule conditionnelle (6) ci-dessous est satisfaite :$\text{1.30 <} \frac{\text{W}}{{\text{f}}_{\text{m}}} \text{< 2.13}$

10. Dispositif de balayage optique comprenant une source de lumière (1), un déflecteur optique (5) destiné à balayer un flux de lumière provenant de la source de lumière, un premier système optique de formation d'image (2, 3, 4) disposé entre la source de lumière (1) et le déflecteur optique, et un second système optique de formation d'image (7, 8) disposé entre le déflecteur optique et une surface devant être balayée (9), dans lequel le second système optique de formation d'image comprend un miroir incurvé (7) destiné à réfléchir un flux de lumière provenant du déflecteur optique (5) et une lentille de correction (8) destinée à corriger le flux de lumière provenant du miroir incurvé sur la surface devant être balayée, le pouvoir convergent dans la direction de balayage secondaire (x) au centre de la lentille de correction dans la direction de balayage (y) étant différent du pouvoir convergent dans la direction de balayage secondaire à la périphérie de la lentille de correction, **caractérisé en ce que**
la surface d'incidence de la lentille de correction (8) est une surface toroïdale en forme de selle présentant un profil défini par une courbe comportant des termes de développement du quatrième ordre ou plus qui est présente dans le plan comprenant la direction de balayage et l'axe optique du système optique, et est tournée autour d'un axe de symétrie en rotation qui est parallèle à la direction de balayage et est présente dans le plan comprenant l'axe optique.

11. Dispositif de balayage optique selon la revendication 10, dans lequel une surface d'émergence de la lentille de correction est une surface cylindrique présentant un pouvoir convergent uniquement dans la direction de balayage.

12. Dispositif de balayage optique selon la revendication 11, dans lequel une surface d'émergence de la lentille de correction est une surface cylindrique asphérique qui présente un pouvoir convergent uniquement dans la direction de balayage et la section de la surface dans la direction de balayage comporte des termes de développement du quatrième ordre ou plus.

13. Dispositif de balayage optique selon la revendication 12, dans lequel, lorsqu'une distance focale du second système optique de formation d'image dans la direction de balayage est fₘ (mm), une largeur de balayage effective de la surface devant être balayée est W (mm), une distance entre un point de déflexion du déflecteur optique et un point de réflexion du miroir incurvé est L (mm), et une distance entre une position la plus à l'extérieur effective du miroir incurvé dans la direction de balayage et un plan tangent d'un sommet de la surface du miroir est zm (mm), la formule conditionnelle (1) ci-dessous est satisfaite :$\text{0.159(} \frac{\text{L}}{{\text{f}}_{\text{m}}} {\text{+C}}_{\text{1}} {\text{)}}^{\text{2}} {\text{+C}}_{\text{2}} \text{-0.267<} \frac{\text{Zm}}{{\text{f}}_{\text{m}}} \text{<0.159(} \frac{\text{L}}{{\text{f}}_{\text{m}}} {\text{+C}}_{\text{1}} {\text{)}}^{\text{2}} {\text{+C}}_{\text{2}} \text{-0.257}$ dans laquelle${\text{C}}_{\text{1}} \text{=0.388(} \frac{\text{W}}{{\text{f}}_{\text{m}}} {\text{)}}^{\text{2}} \text{-0.416} \frac{\text{W}}{{\text{f}}_{\text{m}}} \text{-0.217}$${\text{C}}_{\text{2}} \text{=0.153(} \frac{\text{W}}{{\text{f}}_{\text{m}}} {\text{)}}^{\text{2}} \text{-0.404} \frac{\text{W}}{{\text{f}}_{\text{m}}}$

14. Dispositif de balayage optique selon la revendication 13, dans lequel, lorsqu'un déplacement d'un sommet du miroir incurvé à partir d'un axe optique est xₘ (mm), la formule conditionnelle (2) ci-dessous est satisfaite :${\text{0,5 < x}}_{\text{m}} \text{<5,0}$

15. Dispositif de balayage optique selon la revendication 14, dans lequel, lorsqu'une distance entre un point de réflexion du déflecteur optique et un point de réflexion du miroir incurvé est L (mm), une distance entre le point de réflexion du miroir incurvé et une surface d'incidence de la lentille de correction est M (mm), et la distance focale du second système optique de formation d'image dans la direction de balayage est fₘ (mm), la formule conditionnelle (3) ci-dessous est satisfaite :$\text{0,43(1-} \frac{\text{L}}{{\text{f}}_{\text{m}}} \text{) <} \frac{\text{M}}{{\text{f}}_{\text{m}}} \text{< 0,75}$

16. Dispositif de balayage optique selon la revendication 15, dans lequel un angle formé par un plan vertical à une surface de réflexion du déflecteur optique et parallèle à la direction de balayage et à un axe optique du premier système optique de formation d'image est β_{P} (degré), une distance entre un point de réflexion du déflecteur optique et un point de réflexion du miroir incurvé est L (mm), une distance entre le point de réflexion du miroir incurvé et la surface d'incidence de la lentille de correction est M (mm), une distance focale du second système optique de formation d'image dans la direction de balayage est fₘ (mm), et un déplacement d'un centre de la surface d'incidence de la lentille de correction depuis l'axe optique dans la direction de balayage secondaire est x_{L} (mm), la formule conditionnelle (4) ci-dessous est satisfaite :$\text{0.11} \frac{\text{L}}{{\text{f}}_{\text{m}}} \text{-0.043} \frac{\text{M}}{{\text{f}}_{\text{m}}} \text{+0.0007<} \frac{{\text{5•X}}_{\text{L}}}{{\text{f}}_{\text{m}} {\text{•β}}_{\text{ρ}}} \text{<0.11} \frac{\text{L}}{{\text{f}}_{\text{m}}} \text{-0.043} \frac{\text{M}}{{\text{f}}_{\text{m}}} \text{+0.0155}$

17. Dispositif de balayage optique selon la revendication 16, dans lequel un angle formé par un plan vertical à une surface de réflexion du déflecteur optique et parallèle à la direction de balayage et à un axe optique du premier système optique de formation d'image est β_{P} (degré), une distance entre un point de réflexion du déflecteur optique et un point de réflexion du miroir incurvé est L (mm), une distance entre le point de réflexion du miroir incurvé et une surface d'incidence de la lentille de correction est M (mm), une distance focale du second système optique de formation d'image dans la direction de balayage est fₘ (mm), et un angle formé par une normale à un sommet du miroir incurvé et l'axe optique est βₘ (degré), la formule conditionnelle (5) ci-dessous est satisfaite :$\frac{\text{0,31}}{\frac{\text{L}}{{\text{f}}_{\text{m}}} \text{-0,162}} \text{-} \frac{\text{(} \frac{\text{M}}{{\text{f}}_{\text{m}}} {\text{-0,738)}}^{\text{2}}}{\text{0,42(} \frac{\text{L}}{{\text{f}}_{\text{m}}} {\text{)}}^{\text{2}} \text{+0,00272}} {\text{+1,5<β}}_{\text{m}} \text{·} \frac{\text{5}}{{\text{β}}_{\text{ρ}}} \text{<} \frac{\text{0,31}}{\frac{\text{L}}{{\text{f}}_{\text{m}}} \text{-0,162}} \text{-} \frac{\text{(} \frac{\text{M}}{{\text{f}}_{\text{m}}} {\text{-0,738)}}^{\text{2}}}{\text{0,42(} \frac{\text{L}}{{\text{f}}_{\text{m}}} {\text{)}}^{\text{2}} \text{+0,00272}} \text{+4,5}$

18. Dispositif de balayage optique selon la revendication 17, dans lequel une distance focale du second système optique de formation d'image dans la direction de balayage est fₘ (mm), et une largeur de balayage effective de la surface devant être balayée est W (mm), la formule conditionnelle (6) ci-dessous est satisfaite :$\text{1.30 <} \frac{\text{W}}{{\text{f}}_{\text{m}}} \text{< 2.13}$

19. Dispositif de formation d'image utilisant le dispositif de balayage optique selon la revendication 1.
